# EUROPEAN PATENT SPECIFICATION

(11) **EP 4 620 806 B1**
(45) Date of publication and mention of the grant of the patent: **11.11.2026**
(21) Application number: 24747299.6
(22) Date of filing: 23.01.2024
(51) Int. Cl.: G05D 1/654, G05D 1/244, B64C 13/18, B64C 29/00, G08G 5/21, G08G 5/23, G08G 5/54, G08G 5/55, G08G 5/57, B64D 45/08, B64F 1/18

(54) **AUTOLAND SYSTEM FOR VTOL AIRCRAFT, VTOL AIRCRAFT, AND LANDING CONTROL METHOD FOR VTOL AIRCRAFT**
AUTOMATISCHES LANDESYSTEM FÜR VTOL-FLUGZEUG, VTOL-FLUGZEUG UND LANDESTEUERUNGSVERFAHREN FÜR VTOL-FLUGZEUG
SYSTÈME D'ATTERRISSAGE AUTOMATIQUE POUR AÉRONEF À DÉCOLLAGE ET ATTERRISSAGE VERTICAUX, AÉRONEF À DÉCOLLAGE ET ATTERRISSAGE VERTICAUX, ET PROCÉDÉ DE COMMANDE D'ATTERRISSAGE POUR AÉRONEF À DÉCOLLAGE ET ATTERRISSAGE VERTICAUX

(30) Priority: 23.01.2023 JP 2023008330
(43) Date of publication of application: 24.09.2025
(73) Proprietor: Mitsubishi Heavy Industries, Ltd., Tokyo 100-8332 (JP)
(72) Inventor: KOJIMA, Toru, Tokyo 100-8332 (JP); MORI, Satoshi, Tokyo 100-8332 (JP)
(74) Representative: Hoffmann Eitle
(86) International application number: PCT/JP2024/001848
(87) International publication number: WO 2024/157972

(56) References cited:
- EP-A1- 4 026 770
- JP-A- 2004 130 852
- JP-A- 2021 062 719
- JP-A- 2023 097 126
- JP-A- 2023 104 324
- JP-A- H06 127 485
- US-A1- 2018 224 868
- US-A1- 2022 011 782
- US-A1- 2022 017 235

## Description

### Technical Field

The present disclosure relates to an automatic landing system for a vertical takeoff and landing aircraft, a vertical takeoff and landing aircraft, and a landing control method for a vertical takeoff and landing aircraft.

### Background Art

In the related art, a technique for guiding a vertical takeoff and landing aircraft to a target point is known. As such a technique, for example, there is one disclosed in PTL 1. In the automatic landing system for a vertical takeoff and landing aircraft of PTL 1, when the vertical takeoff and landing aircraft is landed on a landing target point, the vertical takeoff and landing aircraft is transitioned from a high-altitude hovering mode to a low-altitude hovering mode and is transitioned from the low-altitude hovering mode to a landing mode. Then, a mode transition button is turned on for the transition to each mode.

PT2 relates to accurately landing a vertical take-off and landing aircraft on a target landing point. The VTOL aircraft comprises a camera for capturing a marker at the target landing point, marker images processing means to determine the relative position between the aircraft and the landing point, an altitude sensor to determine a relative altitude and a control unit for controlling the aircraft in several modes, including approach mode, hovering mode and landing mode. The transition to landing mode is authorized when predetermined conditions are met, which includes reaching a predetermined low hovering altitude and satisfying attitude angle/ rate limits.

### Citation List

### Patent Literature

[PTL 1] Japanese Unexamined Patent Application Publication No. 2021-062719
[PTL 2] EP 4026770A1

### Summary of Invention

### Technical Problem

In a related art automatic landing system for a vertical takeoff and landing aircraft, the vertical takeoff and landing aircraft is transitioned to a high-altitude hovering mode, a low-altitude hovering mode, and a landing mode, and then the vertical takeoff and landing aircraft is landed on a landing target point. Therefore, it takes a predetermined time until the vertical takeoff and landing aircraft lands on the landing target point. In addition, it is necessary to turn on the mode transition button for the transition to each mode.

The present disclosure is made to solve the above-described problems, and an object of the present disclosure is to provide an automatic landing system for a vertical takeoff and landing aircraft, a vertical takeoff and landing aircraft, and a landing control method for a vertical takeoff and landing aircraft, in which a landing time can be shortened.

### Solution to Problem

This object is accomplished by the subject-matter of the independent claims. The dependent claims concern particular embodiments.

### Advantageous Effects of Invention

According to the automatic landing system for a vertical takeoff and landing aircraft, the vertical takeoff and landing aircraft, and the landing control method for a vertical takeoff and landing aircraft of the present disclosure, it is possible to shorten a landing time.

### Brief Description of Drawings

Fig. 1 is a schematic configuration diagram showing an example of an automatic landing system for a vertical takeoff and landing aircraft according to the present embodiment.
Fig. 2 is an explanatory view showing a state where the vertical takeoff and landing aircraft according to the present embodiment is heading to a landing target point.
Fig. 3 is an explanatory view showing an example of a marker provided at the landing target point.
Fig. 4 is a flowchart showing an example of a processing procedure of a landing control method for the vertical takeoff and landing aircraft according to the present embodiment.
Fig. 5 is an explanatory view showing a landing operation of the vertical takeoff and landing aircraft.
Fig. 6 is an explanatory view showing a mode transition operation of the vertical takeoff and landing aircraft.
Fig. 7 is a flowchart showing an example of a processing procedure in mode transition of the vertical takeoff and landing aircraft.
Fig. 8 is a determination logic showing an example of a generation process of a transition flag at the time of transition from a high-altitude hovering mode to a low-altitude hovering mode.
Fig. 9 is a determination logic showing an example of a generation process of a transition flag at the time of transition from the low-altitude hovering mode (descent mode) to the landing mode.
Fig. 10 is an explanatory diagram of a calculation process of a predicted value of a landable state.
Fig. 11 is a determination logic showing an example of a generation process of a transition flag at the time of transition from the low-altitude hovering mode (hovering mode) to the landing mode.
Fig. 12 is a determination logic showing an example of a generation process of a transition flag at the time of transition from the high-altitude hovering mode to an emergency mode.
Fig. 13 is a determination logic showing an example of a generation process of a transition flag at the time of transition from the low-altitude hovering mode to the emergency mode.
Fig. 14 is a flowchart showing an example of a processing procedure in an approach mode.
Fig. 15 is a flowchart showing an example of a processing procedure in the high-altitude hovering mode.
Fig. 16 is a flowchart showing an example of a processing procedure in the low-altitude hovering mode (descent mode).
Fig. 17 is a flowchart showing an example of a processing procedure in the low-altitude hovering mode (hovering mode).
Fig. 18 is a flowchart showing an example of a processing procedure in the landing mode.
Fig. 19 is a flowchart showing an example of a relative position calculation process.

### Description of Embodiments

Hereinafter, a preferred embodiment of the present disclosure will be described in detail with reference to the drawings. The present disclosure is not limited to the embodiment. In addition, in a case where there are a plurality of embodiments, the present disclosure also includes configurations obtained by combining each embodiment. In addition, constituents in the embodiment include constituents that are easily perceivable by those skilled in the art, constituents that are substantially the same, and constituents within a so-called range of equivalents.

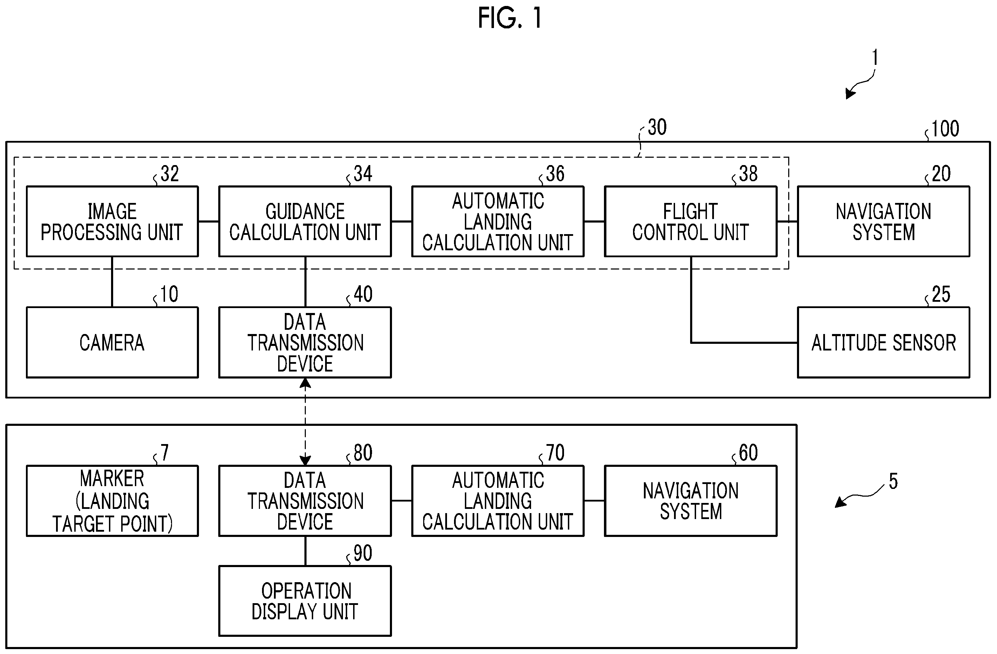

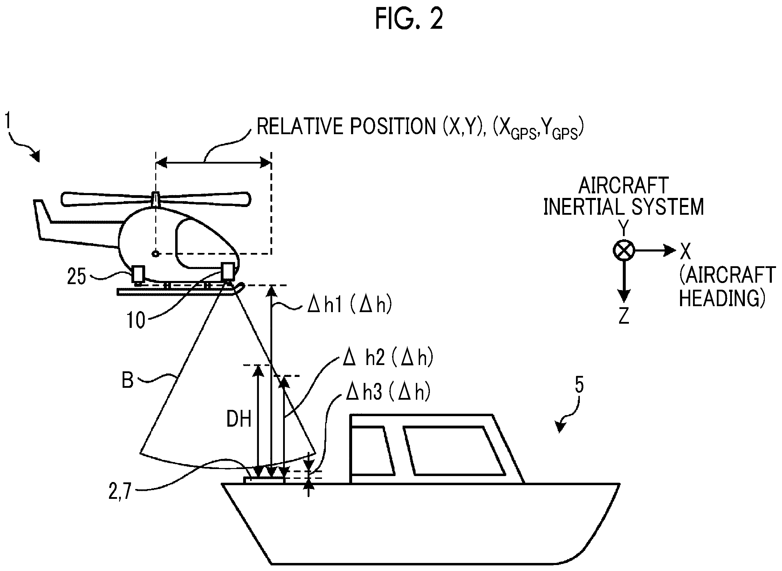

Fig. 1 is a schematic configuration diagram showing an example of an automatic landing system for a vertical takeoff and landing aircraft according to the present embodiment, and Fig. 2 is an explanatory view showing a state where the vertical takeoff and landing aircraft according to the present embodiment is heading to a landing target point.

As shown in Fig. 1, a vertical takeoff and landing aircraft 1 according to the present embodiment is a flying object (for example, a helicopter, a drone, or the like) as a rotary-wing aircraft. In the present embodiment, the vertical takeoff and landing aircraft 1 is an unmanned aircraft. The vertical takeoff and landing aircraft 1 may be any flying object capable of moving forward, backward, turning, and hovering, and may be a manned aircraft. In addition, in a case where the vertical takeoff and landing aircraft 1 is an unmanned aircraft, when the remote manual piloting is executed during the flight control of the unmanned aircraft by the autopilot, flight control based on the remote manual piloting is prioritized. Similarly, in a case where the vertical takeoff and landing aircraft 1 is a manned aircraft, when manual piloting is executed during flight control of the manned aircraft by the autopilot, flight control based on the manual piloting is prioritized. The vertical takeoff and landing aircraft 1 is equipped with an automatic landing system 100, and the flight is controlled by the automatic landing system 100 to land at a landing target point 2 shown in Fig. 2.

### (Landing Target Point)

In the present embodiment, as shown in Fig. 2, the landing target point 2 is provided on the ship 5. Therefore, the vertical takeoff and landing aircraft 1 lands on the ship 5 as a moving object moving on the water. However, the landing target point 2 is not limited to the ship 5, and may be provided in a vehicle or the like as a moving object moving on the ground, or may be provided in a stationary facility or on the ground. Although not shown, the ship 5 is provided with a restraining device for restraining the vertical takeoff and landing aircraft 1 when the vertical takeoff and landing aircraft 1 is landed on the landing target point 2 on the ship.

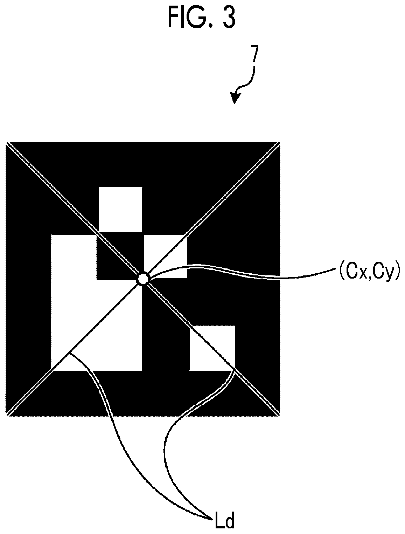

The landing target point 2 is provided with a marker 7 for the vertical takeoff and landing aircraft 1 to capture a position of the landing target point 2. Fig. 3 is an explanatory view showing an example of a marker provided at the landing target point. As shown in Fig. 3, the marker 7 is, for example, an AR marker color-coded in two colors of black and white, and is a square-shaped marker. The marker 7 is not limited to the AR marker, and may be any marker that can capture the position of the landing target point 2 by image processing, and may be, for example, an H mark or an R mark indicating a landing point of a heliport. In addition, a plurality of markers 7 having different shapes may be provided on the ship 5, and the vertical takeoff and landing aircraft 1 may be guided to the landing target point 2 corresponding to any one of the different markers 7.

### (Ship)

As shown in Fig. 1, the ship 5 includes a navigation system 60, an automatic landing calculation unit 70, a data transmission device 80, and an operation display unit 90.

The navigation system 60 is, for example, an inertial navigation system and acquires attitude angles in a pitch direction and a roll direction, a ship heading, a speed, an acceleration, position coordinates in the earth coordinate system, and the like of the ship 5. In the present embodiment, the navigation system 60 is described as being applied to the inertial navigation system, but is not particularly limited, and any navigation system 60 may be used. In addition, in the present embodiment, the navigation system 60 is an inertial navigation system including a global positioning system (GPS) as a position measurement unit in order to improve the measurement accuracy of the position. In the present embodiment, the inertial navigation system including the GPS is applied and described. However, the present disclosure is not particularly limited to the GPS, and any position measurement unit capable of accurately measuring a position may be used. For example, a quasi-zenith satellite system may be used, and a configuration in which the position measurement unit such as the GPS is omitted may be used as long as the position can be accurately measured only by the navigation system 60. In addition, the navigation system 60 may acquire at least a part of various types of data by a sensor.

The automatic landing calculation unit 70 is provided in an automatic landing system 100 to be described later, and calculates the stability of the ship 5 based on a state of the ship 5. The navigation system 60 and the automatic landing calculation unit 70 function as a target point state acquisition unit. Specifically, the automatic landing calculation unit 70 calculates the stability of the ship 5 based on the data acquired by the navigation system 60. The navigation system 60 acquires the attitude angles of the ship 5 in the pitch direction and the roll direction, and the automatic landing calculation unit 70 calculates the stability of the ship 5, for example, based on the attitude angles of the ship 5 in the pitch direction and the roll direction. For example, when the attitude angle of the ship 5 in the pitch direction is within a preset pitch threshold value and the attitude angle of the ship 5 in the roll direction is within a preset roll threshold value, the automatic landing calculation unit 70 turns on (ON) a ship stability flag on the assumption that the stability of the ship 5 is high.

The data transmission device 80 is included in an automatic landing system 100 (to be described later) and exchanges various signals with the data transmission device 40 mounted on the vertical takeoff and landing aircraft 1 through wireless communication. The data transmission device 80 transmits the stability of the ship 5 (the attitude angles of the ship 5 in the pitch direction and the roll direction, the ship stability flag, and the like) calculated by the automatic landing calculation unit 70 to the data transmission device 40. The operation display unit 90 is a user interface through which an operator on board the ship 5 grasps a control status and inputs various instructions. As the instruction input by the operator through the operation display unit 90, for example, a transition instruction of a control mode to be described later is included. The details of the transition instruction will be described later. The instruction input in the operation display unit 90 is transmitted from the data transmission device 80 to the data transmission device 40. In addition, the control status of the vertical takeoff and landing aircraft 1 is transmitted from the data transmission device 40 to the data transmission device 80. That is, the data transmission device 40 and the data transmission device 80 can perform bidirectional communication.

### (Automatic Landing System)

As shown in Fig. 1, an automatic landing system 100 for a vertical takeoff and landing aircraft according to the present embodiment is a system that controls a position of a vertical takeoff and landing aircraft 1 in flight to land the vertical takeoff and landing aircraft 1 on a landing target point 2. The automatic landing system 100 is mounted on the vertical takeoff and landing aircraft 1. The automatic landing system 100 includes a camera 10, a navigation system 20, a control unit 30, and a data transmission device 40. The automatic landing system 100 is a control device, and the control device is a controller. It is realized, for example, by executing various programs stored in the storage unit in a RAM as a work region by a central processing unit (CPU), a micro processing unit (MPU), or the like.

### (Imaging Device)

The camera 10 is an imaging device mounted on the vertical takeoff and landing aircraft 1 via a gimbal (not shown). The camera 10 may be a monocular camera, a stereo camera, an infrared camera, or the like, as long as the camera 10 can capture the marker 7. The camera 10 is provided to capture the marker 7 provided at the landing target point 2 from the vertical takeoff and landing aircraft 1. The camera 10 can adjust an imaging direction via a gimbal (not shown). In the present embodiment, the control unit 30 controls the camera 10 such that an imaging range (angle of view) B (refer to Fig. 2) of the camera 10 faces directly below in a vertical direction as an example. The control unit 30 may control the camera 10 such that the imaging range B faces an oblique front side with respect to the vertical direction. In addition, the camera 10 may also be provided without a gimbal and may be fixed directly below the body of the vertical takeoff and landing aircraft 1 so that the imaging direction faces, for example, the lower side in the vertical direction. In addition, the camera 10 may face a directly below direction (aircraft axial direction) of the vertical takeoff and landing aircraft 1.

### (Navigation System)

The navigation system 20 is an inertial navigation system including, for example, a GPS, as in the navigation system 60. The navigation system 20 may be an inertial navigation system including a position measurement unit such as GPS, as in the navigation system 60, or may be an inertial navigation system excluding a position measurement unit such as GPS, and is not particularly limited. The navigation system 20 including the GPS acquires the attitude angle in the pitch direction and the roll direction of the vertical takeoff and landing aircraft 1, the aircraft heading, the airframe speed, the airframe acceleration, and the position coordinate in the earth coordinate system of the vertical takeoff and landing aircraft 1. The navigation system 20 may have an attitude angle sensor that detects the attitude angle of the vertical takeoff and landing aircraft 1, a speed detection sensor that detects an airframe speed of the vertical takeoff and landing aircraft 1, an acceleration detection sensor that detects the airframe acceleration of the vertical takeoff and landing aircraft 1, and a sensor that detects an aircraft heading of the vertical takeoff and landing aircraft 1. The navigation system 20 outputs the acquired attitude angle, the airframe speed, the airframe acceleration, and the position coordinates of the vertical takeoff and landing aircraft 1 to the control unit 30.

The automatic landing system 100 includes an altitude sensor 25 that detects an altitude of the vertical takeoff and landing aircraft 1 from a ground surface or a water surface. The altitude sensor 25 is, for example, a laser altimeter, and measures a relative altitude Δh (refer to Fig. 2) from the vertical takeoff and landing aircraft 1 to the landing target point 2. As the altitude sensor 25, a radio altimeter, a barometric altimeter, or any altimeter may be used. In addition, the altimeters may be appropriately combined and applied to measure an altitude from a ground surface or an altitude from a sea surface according to a use environment. The altitude sensor 25 outputs the detected relative altitude Δh of the vertical takeoff and landing aircraft 1 to the control unit 30. The altitude sensor 25 measures the altitude of the vertical takeoff and landing aircraft 1 and outputs the altitude to the control unit 30, and the control unit 30 may calculate the relative altitude Δh (refer to Fig. 2) to the landing target point 2 based on the altitude of the vertical takeoff and landing aircraft 1 in a guidance calculation unit 34 (to be described later). In addition, the automatic landing system 100 may not be limited to the altitude sensor 25, and may calculate the relative altitude Δh between the vertical takeoff and landing aircraft 1 and the ship 5 by performing image processing on an image including the marker 7 captured by the camera 10 in an image processing unit 32 which will be described later. The relative altitude Δh between the vertical takeoff and landing aircraft 1 and the ship 5 may be used with the relative position (Zₘₐᵣₖ) between the vertical takeoff and landing aircraft 1 and the landing target point 2, which will be described later.

### (Control Unit)

The control unit 30 includes an image processing unit 32, a guidance calculation unit 34, an automatic landing calculation unit 36, and a flight control unit 38. The control unit 30 includes an imaging control unit (not shown) that controls the imaging direction of the camera 10 via a gimbal (not shown) provided in the vertical takeoff and landing aircraft 1. In the present embodiment, as described above, the imaging range B of the camera 10 is adjusted to face directly below in the vertical direction.

### (Image Processing Unit)

The image processing unit 32 performs image processing on the image captured by the camera 10 to calculate the center (Cx, Cy) (refer to Fig. 3) of the marker 7, that is, the landing target point 2. The center (Cx, Cy) here is a coordinate point in a camera fixed coordinate system in which the center of the image captured by the camera 10 is the origin, and can be calculated by the number of pixels from the center of the image. Specifically, as shown in Fig. 3, the image processing unit 32 specifies two diagonal lines Ld extending between corner portions of the marker 7 through image processing, and sets an intersection of the two specified diagonal lines Ld as the center (Cx, Cy) of the marker 7. The landing target point 2 is not limited to the center (Cx, Cy) of the marker 7, and may be any of the four corners of the marker 7 or a position offset from the center of the marker 7.

The image processing unit 32 may specify only one diagonal line Ld and may use the center position of the length of the specified diagonal line Ld as the center (Cx, Cy) of the marker 7. In addition, the image processing unit 32 may specify two or more diagonal lines Ld and may set a position that is an average of the center positions of the lengths of the specified diagonal lines Ld as the center (Cx, Cy) of the marker 7. Further, when the image processing unit 32 performs trapezoidal correction on the square-shaped marker 7 using the function of the projection transformation, the image processing unit 32 may calculate the center (Cx, Cy) of the square based on the function. In that case, trapezoidal correction may be performed using the coordinate points of the four corners of the marker 7 or the coordinate points of each point of the boundary of the marker 7 color-coded in black and white, and the other coordinate points may be calculated by interpolation. The image processing unit 32 outputs the calculated center (Cx, Cy) of the marker 7 to the guidance calculation unit 34. The image processing unit 32 may calculate the center (Cx, Cy, Cz) of the landing target point 2 and output the center to the guidance calculation unit 34.

In addition, as described above, the image processing unit 32 may calculate the relative altitude Δh between the vertical takeoff and landing aircraft 1 and the ship 5 by performing image processing on the image including the marker 7 captured by the camera 10. Further, the image processing unit 32 may specify a direction of the marker 7 by performing image processing on the image including the marker 7 captured by the camera 10, and may calculate the ship heading of the ship 5 by associating the direction of the marker 7 with the aircraft heading of the vertical takeoff and landing aircraft 1 acquired by the navigation system 20. A marker for calculating the ship heading may be separately provided in the ship 5.

### (Guidance Calculation Unit)

The guidance calculation unit 34 calculates an operation amount of the vertical takeoff and landing aircraft 1 for guiding the vertical takeoff and landing aircraft 1 to the landing target point 2. The operation amount is an operation amount for adjusting the airframe speed, the attitude angle, a change rate of the attitude angle, and the like of the vertical takeoff and landing aircraft 1. The guidance calculation unit 34 calculates a relative position (X, Y) between the vertical takeoff and landing aircraft 1 and the landing target point 2 and a relative speed between the vertical takeoff and landing aircraft 1 and the landing target point 2 in order to calculate the operation amount. The guidance calculation unit 34 may calculate a relative position (X, Y, Z) between the vertical takeoff and landing aircraft 1 and the landing target point 2 and a relative speed between the vertical takeoff and landing aircraft 1 and the landing target point 2. In addition, the guidance calculation unit 34 may be provided in the ship 5, and the operation amount of the vertical takeoff and landing aircraft 1 may be calculated on the ship 5 side.

The guidance calculation unit 34 calculates the relative position (X, Y) between the vertical takeoff and landing aircraft 1 and the landing target point 2 based on the center (Cx, Cy) of the marker 7 calculated by the image processing unit 32, the heading of the camera 10, that is, the aircraft heading of the vertical takeoff and landing aircraft 1, and the altitude of the vertical takeoff and landing aircraft 1 (the relative altitude Δh with respect to the landing target point 2). In the present embodiment, the heading of the camera 10 is made to coincide with the aircraft heading of the vertical takeoff and landing aircraft 1. However, the present disclosure is not particularly limited thereto, and the heading of the camera 10 may not coincide with the aircraft heading of the vertical takeoff and landing aircraft 1. In this way, the image processing unit 32 and the guidance calculation unit 34 function as a relative position acquisition unit that acquires the relative position between the vertical takeoff and landing aircraft 1 and the landing target point 2. The relative position (X, Y) is a distance between the vertical takeoff and landing aircraft 1 and the landing target point 2 in the horizontal direction. More specifically, the guidance calculation unit 34 converts the center (Cx, Cy) of the marker 7 in the camera fixed coordinate system calculated by the image processing unit 32 into the relative position between the vertical takeoff and landing aircraft 1 and the landing target point 2 in a ship inertial system, based on the aircraft heading of the vertical takeoff and landing aircraft 1 and the altitude of the vertical takeoff and landing aircraft 1 (relative altitude Δh with respect to the landing target point 2), and further converts the center (Cx, Cy) of the marker 7 into the relative position (Xₘₐᵣₖ, Yₘₐᵣₖ) or the relative position (Xₘₐᵣₖ, Yₘₐᵣₖ, Zₘₐᵣₖ) between the vertical takeoff and landing aircraft 1 and the landing target point 2 in an aircraft inertial system. At this time, the guidance calculation unit 34 may directly convert the center(Cx, Cy) of the marker 7 into the relative position (Xₘₐᵣₖ, Yₘₐᵣₖ) or the relative position (Xₘₐᵣₖ, Yₘₐᵣₖ, Zₘₐᵣₖ) between the vertical takeoff and landing aircraft 1 and the landing target point 2 in the aircraft inertial system based on the aircraft heading of the vertical takeoff and landing aircraft 1 and the altitude of the vertical takeoff and landing aircraft 1 (relative altitude Δh with respect to the landing target point 2). The ship inertial system is a coordinate system in which the landing target point 2 is an origin, and a direction along the ship heading of the ship 5, a direction orthogonal to the ship heading of the ship 5 in the horizontal direction, and a vertical direction are orthogonal axes. In addition, as shown in Fig. 2, the aircraft inertial system is a coordinate system in which the vertical takeoff and landing aircraft 1 is an origin, a direction along the aircraft heading of the vertical takeoff and landing aircraft 1 is an X axis, a direction orthogonal to the aircraft heading of the vertical takeoff and landing aircraft 1 in a horizontal direction is a Y axis, and the vertical direction is a Z axis.

In addition, the guidance calculation unit 34 calculates a relative position (X_{GPS}, Y_{GPS}) or a relative position (X_{GPS}, Y_{GPS}, Z_{GPS}) between the vertical takeoff and landing aircraft 1 and the landing target point 2, based on the position coordinates of the vertical takeoff and landing aircraft 1 in the earth coordinate system acquired by the navigation system 20 and the position coordinates of the ship 5 in the earth coordinate system acquired by the navigation system 60 of the ship 5 and obtained through communication between the data transmission devices 40 and 80. The guidance calculation unit 34 may directly calculate the relative position (X_{GPS}, Y_{GPS}, Z_{GPS}) without calculating position information of the vertical takeoff and landing aircraft 1 and position information of the ship 5. Therefore, the guidance calculation unit 34 functions as a second relative position acquisition unit that calculates the relative position (X_{GPS}, Y_{GPS}) between the vertical takeoff and landing aircraft 1 and the landing target point 2 based on the position coordinates of the vertical takeoff and landing aircraft 1 acquired by the GPS and the position coordinates of the ship 5 provided with the landing target point 2 acquired by the data transmission device 40.

In addition, the guidance calculation unit 34 calculates the relative speed between the vertical takeoff and landing aircraft 1 and the landing target point 2. Therefore, the guidance calculation unit 34 functions as a relative speed acquisition unit that acquires the relative speed between the vertical takeoff and landing aircraft 1 and the landing target point 2. More specifically, the guidance calculation unit 34 calculates the relative speed, for example, based on a difference between the airframe speed of the vertical takeoff and landing aircraft 1 acquired by the navigation systems 20 and 60 and the hull speed of the ship 5. In addition, the guidance calculation unit 34 may calculate the relative speed based on a pseudo-differentiation of the relative position (X, Y). That is, the guidance calculation unit 34 functions as a relative speed acquisition unit that acquires the relative speed. In addition, the guidance calculation unit 34 calculates the relative heading between the aircraft heading of the vertical takeoff and landing aircraft 1 and the ship heading of the ship 5. In this way, the image processing unit 32 and the guidance calculation unit 34 function as a relative heading acquisition unit that acquires the relative heading between the vertical takeoff and landing aircraft 1 and the landing target point 2.

In addition, the guidance calculation unit 34 calculates the relative altitude Δh to the landing target point 2, based on the altitude of the vertical takeoff and landing aircraft 1 detected by the altitude sensor 25. Therefore, the altitude sensor 25 and the guidance calculation unit 34 function as a relative altitude acquisition unit that acquires the relative altitude Δh between the vertical takeoff and landing aircraft 1 and the landing target point 2. In a case where the image processing unit 32 performs image processing on the image including the marker 7 captured by the camera 10 to calculate the relative altitude Δh between the vertical takeoff and landing aircraft 1 and the ship 5, the image processing unit 32 serves as the relative altitude acquisition unit.

Then, the guidance calculation unit 34 calculates an operation amount by feedback control (for example, PID control) based on the relative position (X, Y), the relative speed, the relative heading, and the airframe acceleration. In the present embodiment, the guidance calculation unit 34 calculates the operation amount of the vertical takeoff and landing aircraft 1 by feedback control such that the relative position (X, Y) and the relative heading are zero. In addition, the guidance calculation unit 34 may calculate the operation amount of the vertical takeoff and landing aircraft 1 by feedback control such that the relative speed is within a predetermined speed and the airframe acceleration is within a predetermined acceleration. The predetermined speed and the predetermined acceleration are within a range that satisfies a state where the vertical takeoff and landing aircraft 1 stably flies at the predetermined relative altitude Δh. For example, the predetermined speed is zero, and the predetermined acceleration is zero. The guidance calculation unit 34 outputs the calculated operation amount to the flight control unit 38. In calculating such an operation amount, the guidance calculation unit 34 controls the vertical takeoff and landing aircraft 1 in a plurality of control modes to guide the vertical takeoff and landing aircraft 1 to the landing target point and land the vertical takeoff and landing aircraft 1. The plurality of control modes include an approach mode, a hovering mode including a high-altitude hovering mode and a low-altitude hovering mode, and a landing mode. Details of each control mode will be described later.

### (Automatic Landing Calculation Unit)

The automatic landing calculation unit 36 calculates the stability of the vertical takeoff and landing aircraft 1 based on the state of the vertical takeoff and landing aircraft 1. The navigation system 20 and the automatic landing calculation unit 36 function as an airframe state acquisition unit. Specifically, the automatic landing calculation unit 36 calculates the stability of the vertical takeoff and landing aircraft 1 based on the data acquired by the navigation system 20. The navigation system 20 acquires the attitude angles of the vertical takeoff and landing aircraft 1 in the pitch direction and the roll direction, and the automatic landing calculation unit 36 calculates the stability of the vertical takeoff and landing aircraft 1, for example, based on the attitude angles of the vertical takeoff and landing aircraft 1 in the pitch direction and the roll direction. For example, when the attitude angle of the vertical takeoff and landing aircraft 1 in the pitch direction is within a preset pitch threshold value and the attitude angle of the vertical takeoff and landing aircraft 1 in the roll direction is within a preset roll threshold value, the automatic landing calculation unit 70 turns on (ON) the vertical takeoff and landing aircraft stability flag on the assumption that the stability of the vertical takeoff and landing aircraft 1 is high.

The automatic landing calculation unit 36 permits the transition to the landing mode in a case where the preset landing condition is satisfied when the vertical takeoff and landing aircraft 1 descends to the determined relative altitude DH during execution of the low-altitude hovering mode. On the other hand, the automatic landing calculation unit 36 does not permit the transition to the landing mode and maintains the low-altitude hovering mode in a case where the landing condition is not satisfied when the vertical takeoff and landing aircraft 1 descends to the determined relative altitude DH during execution of the high-altitude hovering mode.

### (Flight Control Unit)

The flight control unit 38 controls each component of the vertical takeoff and landing aircraft 1 to fly the vertical takeoff and landing aircraft 1 according to the operation amount calculated by the guidance calculation unit 34 and the transition mode calculated by the automatic landing calculation unit 36. The flight control unit 38 controls a blade pitch angle, the rotation speed, and the like of each rotor blade according to the operation amount, and adjusts the airframe speed, the attitude angle, the change rate of the attitude angle, and the like of the vertical takeoff and landing aircraft 1. Accordingly, the vertical takeoff and landing aircraft 1 is guided to the landing target point 2.

In the present embodiment, the image processing unit 32, the guidance calculation unit 34, and the automatic landing calculation unit 36 are described as functional units separate from the flight control unit 38. However, the image processing unit 32, the guidance calculation unit 34, and the automatic landing calculation unit 36 may be functional units integrated with the flight control unit 38. The flight control unit 38 may perform processing of the image processing unit 32, the guidance calculation unit 34, and the automatic landing calculation unit 36.

### (Landing Control Method of Vertical Takeoff and Landing Aircraft)

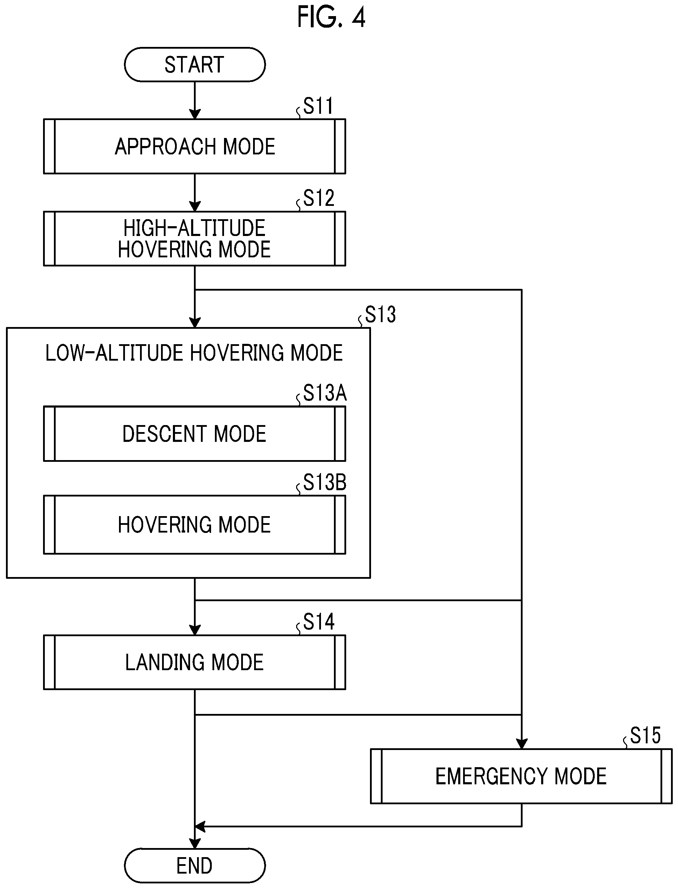

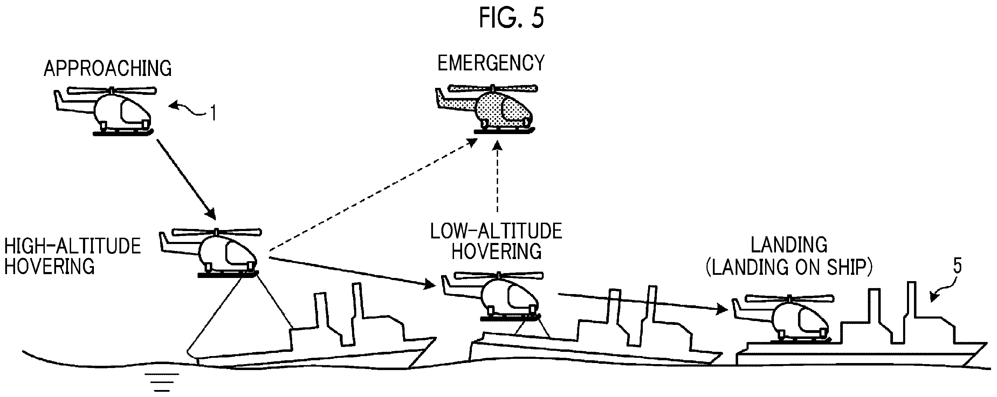

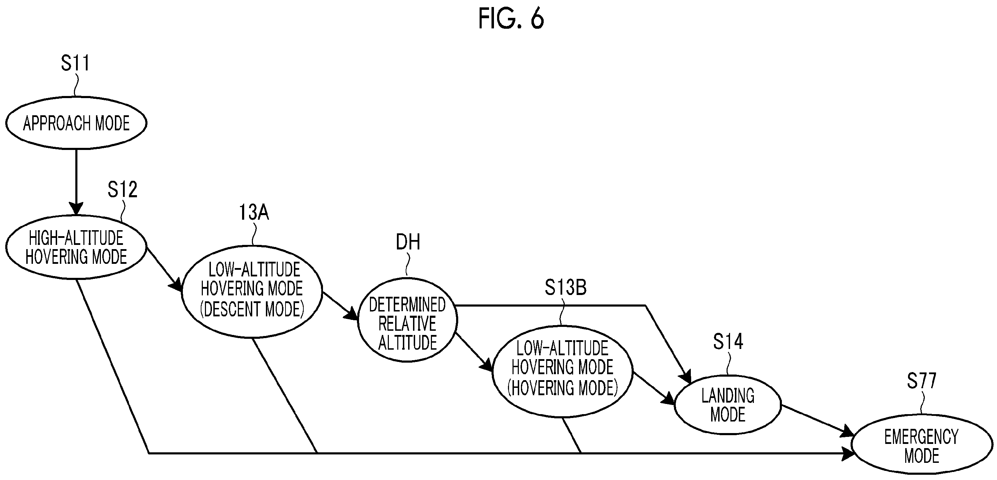

Next, a procedure for guiding the vertical takeoff and landing aircraft 1 to the landing target point 2 and landing the vertical takeoff and landing aircraft 1 at the landing target point 2 by the control unit 30 will be described as a landing control method of the vertical takeoff and landing aircraft according to the present embodiment. Fig. 4 is a flowchart showing an example of a processing procedure of a landing control method for the vertical takeoff and landing aircraft according to the present embodiment, Fig. 5 is an explanatory view showing a landing operation of the vertical takeoff and landing aircraft, and Fig. 6 is an explanatory view showing a mode transition operation of the vertical takeoff and landing aircraft.

As shown in Figs. 4 and 5, the vertical takeoff and landing aircraft 1 executes a plurality of control modes in a series of landing operations of landing on the ship 5 from a flight state. Specifically, the vertical takeoff and landing aircraft 1 performs a series of landing operations by sequentially performing step S11 of executing an approach mode, step S12 of executing a high-altitude hovering mode, step S13 of executing a low-altitude hovering mode, and step S14 of executing a landing mode. Here, the low-altitude hovering mode includes a step S13A of executing the descent mode (first mode) and a step S13B of executing the hovering mode (second mode). In addition, the vertical takeoff and landing aircraft 1 is performing a step S15 of executing an emergency mode of interrupting execution of the high-altitude hovering mode, the low-altitude hovering mode, or the like to interrupt the landing operation.

As shown in Fig. 5, the approach mode is a mode in which the vertical takeoff and landing aircraft 1 is caused to approach the deck of the ship 5 by an instruction from the ship 5, and the vertical takeoff and landing aircraft 1 hovers on the marker 7 that is the landing target point 2. The high-altitude hovering mode is a mode in which the vertical takeoff and landing aircraft 1 hovers such that the marker 7 on the deck is captured by the camera 10 and the landing target point 2, which is the center of the marker 7, is at the center of the imaging range (angle of view) B of the camera 10. The low-altitude hovering mode is a mode in which the vertical takeoff and landing aircraft 1 descends and hovers at an altitude lower than that in the high-altitude hovering mode. That is, the low-altitude hovering mode includes a descent mode in which the vertical takeoff and landing aircraft 1 descends from the high-altitude hovering mode to the low altitude, and a hovering mode in which hovering is performed at the low altitude after the descent. The landing mode is a mode in which the vertical takeoff and landing aircraft 1 lands on the landing target point 2. The emergency mode is a mode in which the vertical takeoff and landing aircraft 1 interrupts the landing operation on the ship 5 and ascends.

As shown in Fig. 4, the vertical takeoff and landing aircraft 1 is capable of sequentially performing step S11 of executing the approach mode, step S12 of executing the high-altitude hovering mode, step S13 of executing the low-altitude hovering mode, and step S14 of executing the landing mode. Then, step S13 of executing the low-altitude hovering mode has the descent mode and the hovering mode. In addition, the vertical takeoff and landing aircraft 1 has step S15 of executing the emergency mode.

As shown in Fig. 6, in a case where the mode transition condition to the preset high-altitude hovering mode is satisfied during the execution of the approach mode (step S11), the vertical takeoff and landing aircraft 1 transitions to the high-altitude hovering mode (step S12). In a case where the mode transition condition to the preset low-altitude hovering mode is satisfied during the execution of the high-altitude hovering mode (step S12), the vertical takeoff and landing aircraft 1 transitions to the low-altitude hovering mode (step S13). In the low-altitude hovering mode, the descent mode (S13A) is executed to descend to the determined relative altitude DH, and in a case where the mode transition condition to the preset landing mode is satisfied, the mode is transitioned to the landing mode (step S14). On the other hand, when the descent mode (S13A) is executed to descend to the determined relative altitude DH, and in a case where the mode transition condition to the landing mode is not satisfied, the vertical takeoff and landing aircraft 1 transitions to the hovering mode (S13B). Then, in a case where the mode transition condition to the preset landing mode is satisfied during the execution of the hovering mode (S13B) in the low-altitude hovering mode (step S13), the vertical takeoff and landing aircraft 1 transitions to the landing mode (step S14). In addition, in a case where the mode transition condition is not satisfied, specifically, in a case where the mode transition condition to the emergency mode is satisfied during execution of the high-altitude hovering mode (step S12), the descent mode in the low-altitude hovering mode (step S13A), the hovering mode in the low-altitude hovering mode (step S13B), or the landing mode (step S14), the vertical takeoff and landing aircraft 1 transitions to the emergency mode (step S15).

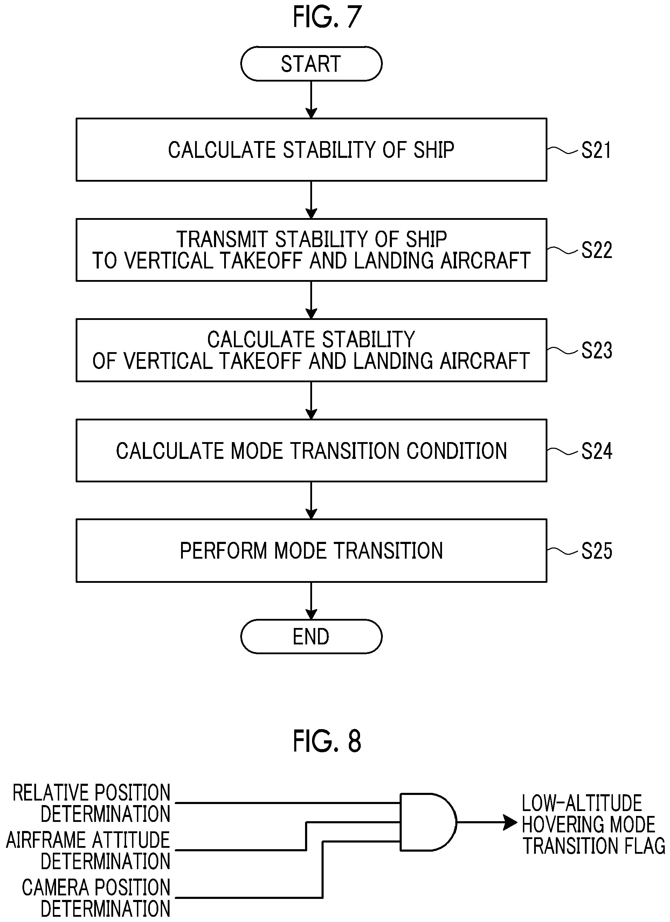

Here, the mode transition processing will be described. Fig. 7 is a flowchart showing an example of a processing procedure in mode transition of the vertical takeoff and landing aircraft. As shown in Fig. 7, the automatic landing calculation unit 36 calculates the stability of the ship 5 based on the state of the ship 5 in step S21. That is, the automatic landing calculation unit 70 calculates the stability of the ship 5 based on the attitude angles of the ship 5 in the pitch direction and the roll direction acquired by the navigation system 60. Here, for example, when the attitude angle of the ship 5 in the pitch direction is within the pitch threshold value and the attitude angle of the ship 5 in the roll direction is within the roll threshold value, the ship stability flag is turned on (ON) on the assumption that the stability of the ship 5 is high. On the other hand, when the attitude angle of the ship 5 in the pitch direction is not within the pitch threshold value or the attitude angle of the ship 5 in the roll direction is not within the roll threshold value, the ship stability flag is turned off (OFF) on the assumption that the stability of the ship 5 is low.

As step S22, the data transmission device 80 transmits the stability of the ship 5 (the attitude angles of the ship 5 in the pitch direction and the roll direction, the ship stability flag, and the like) calculated by the automatic landing calculation unit 70 to the data transmission device 40 of the vertical takeoff and landing aircraft 1. As step S23, the automatic landing calculation unit 36 calculates the stability of the vertical takeoff and landing aircraft 1 based on the state of the vertical takeoff and landing aircraft 1. That is, the automatic landing calculation unit 36 calculates the stability of the vertical takeoff and landing aircraft 1 based on the attitude angles of the vertical takeoff and landing aircraft 1 in the pitch direction and the roll direction acquired by the navigation system 20. Here, for example, when the attitude angle of the vertical takeoff and landing aircraft 1 in the pitch direction is within the pitch threshold value and the attitude angle of the vertical takeoff and landing aircraft 1 in the roll direction is within the roll threshold value, the airframe stability flag is turned on (ON) on the assumption that the stability of the vertical takeoff and landing aircraft 1 is high. On the other hand, when the attitude angle of the vertical takeoff and landing aircraft 1 in the pitch direction is not within the pitch threshold value or when the attitude angle of the vertical takeoff and landing aircraft 1 in the roll direction is not within the roll threshold value, the airframe stability flag is turned off (OFF) on the assumption that the stability of the vertical takeoff and landing aircraft 1 is low.

As step S24, the automatic landing calculation unit 36 calculates the mode transition condition. As the mode transition conditions, a transition condition from the high-altitude hovering mode to the low-altitude hovering mode, a transition condition (landing condition) to the landing mode when the descent mode (S13A) is executed in the low-altitude hovering mode and the vertical takeoff and landing aircraft 1 descends to the determined relative altitude DH, and a transition condition to the landing mode during the execution of the hovering mode (S13B) in the low-altitude hovering mode are set. In addition, as the mode transition conditions, a transition condition from the high-altitude hovering mode to the emergency mode and a transition condition from the low-altitude hovering mode to the emergency mode are set. As step S25, the flight control unit 38 performs the transition to each mode in a case where the mode transition condition is satisfied.

First, the transition processing from the high-altitude hovering mode to the low-altitude hovering mode will be described. Fig. 8 is a determination logic showing an example of a generation process of a transition flag at the time of transition from a high-altitude hovering mode to a low-altitude hovering mode.

As shown in Fig. 8, the mode transition condition from the high-altitude hovering mode to the low-altitude hovering mode is relative position determination, airframe attitude determination, and camera position determination. In the relative position determination, when a state where fluctuation amounts of the relative position (X) and the relative position (Y) are within the threshold value continues for a predetermined time, the flag is turned on (ON). When the flag of at least one of the relative position (X) and the relative position (Y) is turned on (ON), the flag of the relative position (X, Y) is turned on (ON).

The airframe attitude determination is determination of the stability of the vertical takeoff and landing aircraft 1 calculated by the above-described automatic landing calculation unit 36, and is an airframe stability flag as the attitude angle in the pitch direction and the attitude angle in the roll direction. In the airframe attitude determination, when a state where the stability of the vertical takeoff and landing aircraft 1 is within the threshold value continues for a predetermined time, the flag is turned on (ON). In the camera position determination, when the imaging range of the camera 10 is directly below, the flag is turned on (ON). When the flags for the relative position determination, the airframe attitude determination, and the camera position determination are turned on (ON), the transition flag to the low-altitude hovering mode is turned on (ON).

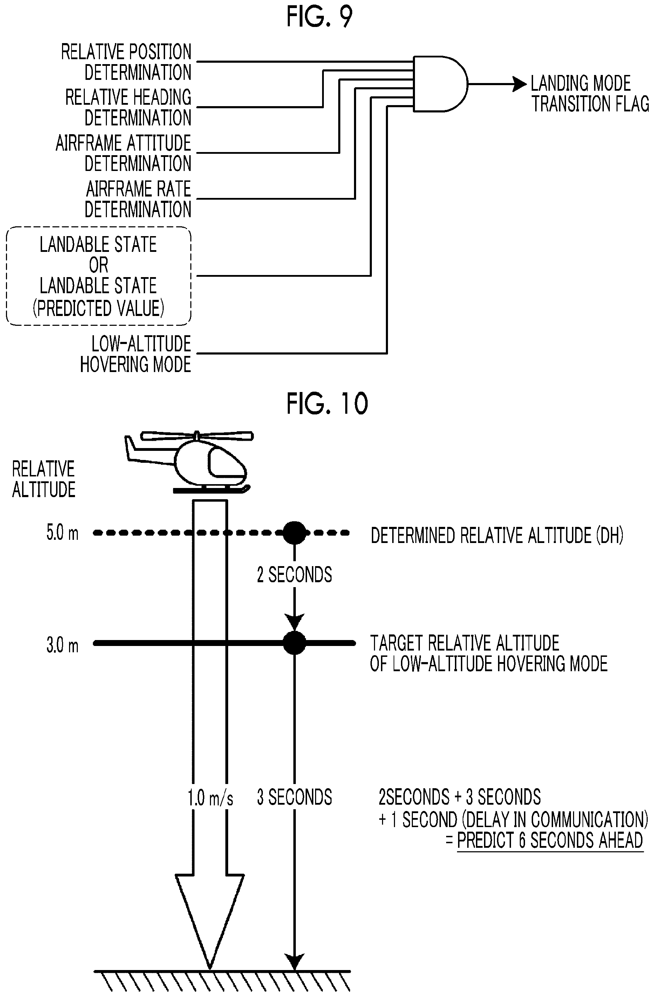

Next, the transition processing from the descent mode in the low-altitude hovering mode to the landing mode will be described. Fig. 9 is a determination logic showing an example of a generation process of a transition flag at the time of transition from the low-altitude hovering mode (descent mode) to the landing mode., and Fig. 10 is an explanatory diagram of a calculation process of a predicted value of a landable state.

As shown in Fig. 9, the mode transition condition from the descent mode in the low-altitude hovering mode to the landing mode is relative position determination, relative heading determination, airframe attitude determination, airframe rate determination, the landable state of the ship 5 or the landable state (predicted value) of the ship 5, and the low-altitude hovering mode being executed. The relative position determination is the same as the relative position (X) and the relative position (Y) described above. Similar to the relative position (X) and the relative position (Y) described above, in the relative heading determination, when a state where the fluctuation amount of the relative heading (X, Y) is within the threshold value continues for a predetermined time, the flag is turned on (ON). The airframe attitude determination is the stability of the vertical takeoff and landing aircraft 1 calculated by the above-described automatic landing calculation unit 36. The airframe rate determination is a fluctuation amount of the attitude angle in the pitch direction and a fluctuation amount of the attitude angle in the roll direction in the vertical takeoff and landing aircraft 1, and when a state where each fluctuation amount is within the threshold value continues for a predetermined time, the flag is turned on (ON).

The landable state of the ship 5 is determination of the stability of the ship 5 calculated by the automatic landing calculation unit 70 described above, and is a ship stability flag as the attitude angle in the pitch direction and the attitude angle in the roll direction. The landable state (predicted value) of the ship 5 is the stability (ship stability flag (ON)) of the ship 5 after a predetermined time. For example, as shown in Fig. 10, when the relative altitude of the vertical takeoff and landing aircraft 1 with respect to the landing target point 2 is lowered and reaches the determined relative altitude DH, a case where the determined relative altitude DH is 5.0 m and the target relative altitude in the low-altitude hovering mode is 3.0 m will be described. At this time, the speed (descent rate) at which the vertical takeoff and landing aircraft 1 at the determined relative altitude DH descends to the target relative altitude in the low-altitude hovering mode is constant, and the descent time is 2 seconds. In addition, the speed (descent rate) at which the vertical takeoff and landing aircraft 1 at the target relative altitude in the low-altitude hovering mode descends to the landing target point 2 is constant, and the descent time is 3 seconds. Therefore, the descent time until the vertical takeoff and landing aircraft 1 at the determined relative altitude DH lands on the landing target point 2 is 5 seconds (2 seconds + 3 seconds), and in a case where 1 second for a communication delay time or the like is secured, the descent time is 6 seconds. Therefore, when the vertical takeoff and landing aircraft 1 reaches the determined relative altitude DH, the automatic landing calculation unit 70 predicts the stability of the ship 5 after 6 seconds. In the determination of the landable state, when the state where the stability of the ship 5 is within the threshold value continues for a predetermined time, the flag is turned on (ON). In addition, during the execution of the low-altitude hovering mode, the low-altitude hovering mode flag is turned on (ON).

In the descent mode in the low-altitude hovering mode, in a case where six mode transition conditions of the relative position determination, the relative heading determination, the airframe attitude determination, the airframe rate determination, the landable state (current value) of the ship 5 or the landable state (predicted value) of the ship 5, and the low-altitude hovering mode being executed are satisfied, the transition flag to the landing mode is turned on (ON), and at this time, the transition flag to the landing mode is turned on (ON). Although the landable state (current value) or the landable state (predicted value) is used, a configuration may be adopted in which either the landable state (current value) alone or the landable state (predicted value) alone is included in the mode transition condition.

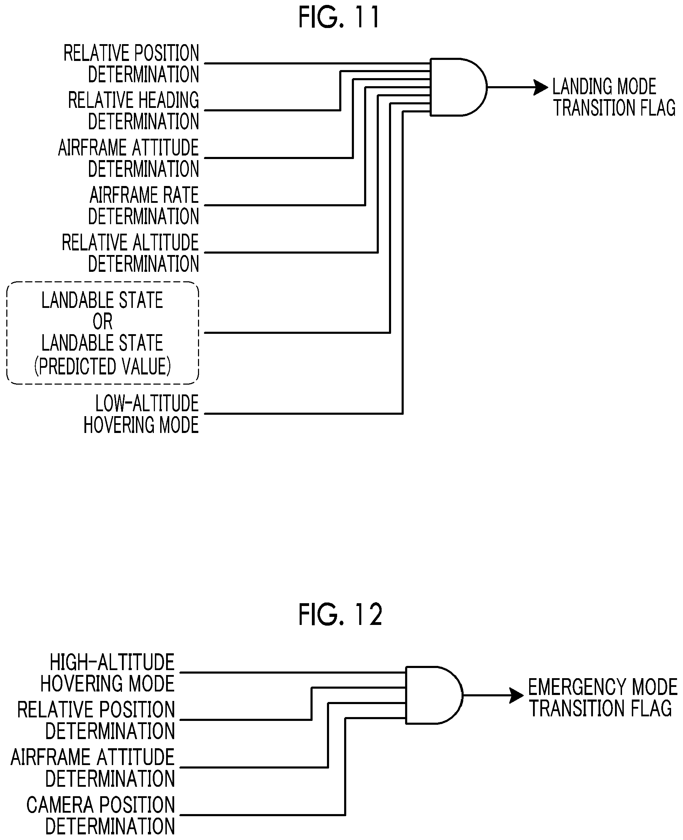

Subsequently, the transition processing from the hovering mode in the low-altitude hovering mode to the landing mode will be described. Fig. 11 is a determination logic showing an example of a generation process of a transition flag at the time of transition from the low-altitude hovering mode (hovering mode) to the landing mode.

As shown in Fig. 11, the mode transition condition from the hovering mode in the low-altitude hovering mode to the landing mode is the relative position determination, the relative heading determination, the airframe attitude determination, the airframe rate determination, the relative altitude determination, the landable state of the ship 5 or the landable state (predicted value) of the ship 5, and the low-altitude hovering mode being executed. The relative position determination, the relative heading determination, the airframe attitude determination, and the airframe rate determination are the same as the determination described above. In the relative altitude determination, when a state where the fluctuation amount of the relative altitude is within the threshold value continues for a predetermined time, the flag is turned on (ON). The landable state of the ship 5 or the landable state (predicted value) of the ship 5 is the same as the determination described above. However, a predicted value after a predetermined time has elapsed according to the target relative altitude is used. For example, the landable state (predicted value) of the ship 5 is 4 seconds (3 seconds + 1 second) for the vertical takeoff and landing aircraft 1 at the target relative altitude in the low-altitude hovering mode to descend to the landing target point 2, and the automatic landing calculation unit 70 predicts the stability of the ship 5 after 4 seconds when the vertical takeoff and landing aircraft 1 reaches the target relative altitude in the low-altitude hovering mode.

In the hovering mode in the low-altitude hovering mode, in a case where seven mode transition conditions of the relative position determination, the relative heading determination, the airframe attitude determination, the airframe rate determination, the relative altitude determination, the landable state of the ship 5 or the landable state (predicted value) of the ship 5, and the low-altitude hovering mode being executed are satisfied, the transition flag to the landing mode is turned on (ON).

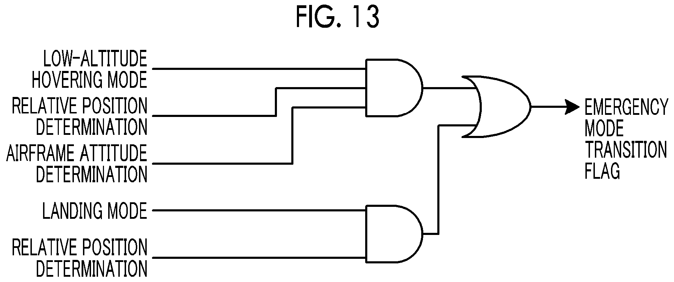

In addition, the transition processing from the high-altitude hovering mode or the low-altitude hovering mode to the emergency mode will be described. Fig. 12 is a determination logic showing an example of a generation process of a transition flag at the time of transition from the high-altitude hovering mode to an emergency mode, and Fig. 13 is a determination logic showing an example of a generation process of a transition flag at the time of transition from the low-altitude hovering mode to the emergency mode.

As shown in Fig. 12, the mode transition condition from the high-altitude hovering mode to the emergency mode is the execution of the high-altitude hovering mode, the relative position determination, the airframe attitude determination, and the camera position determination. The relative position determination, the airframe attitude determination, and the camera position determination are the same as those described above.

When the high-altitude hovering mode is being executed and the flags for the relative position determination, the airframe attitude determination, and the camera position determination are turned on (ON), the transition flag to the emergency mode is turned on (ON).

As shown in Fig. 13, the first mode transition condition from the low-altitude hovering mode to the emergency mode is that the low-altitude hovering mode is being executed.

In addition, the second mode transition condition from the low-altitude hovering mode to the emergency mode is the relative position determination and the airframe attitude determination. The relative position determination and the airframe attitude determination are the same as those described above. In addition, the third mode transition condition from the low-altitude hovering mode to the emergency mode is that the landing mode is being executed and the relative position determination.

Then, in the low-altitude hovering mode, in a case where any one of the first mode transition condition, the second mode transition condition, and the third mode transition condition is satisfied, the transition flag to the emergency mode is turned on (ON).

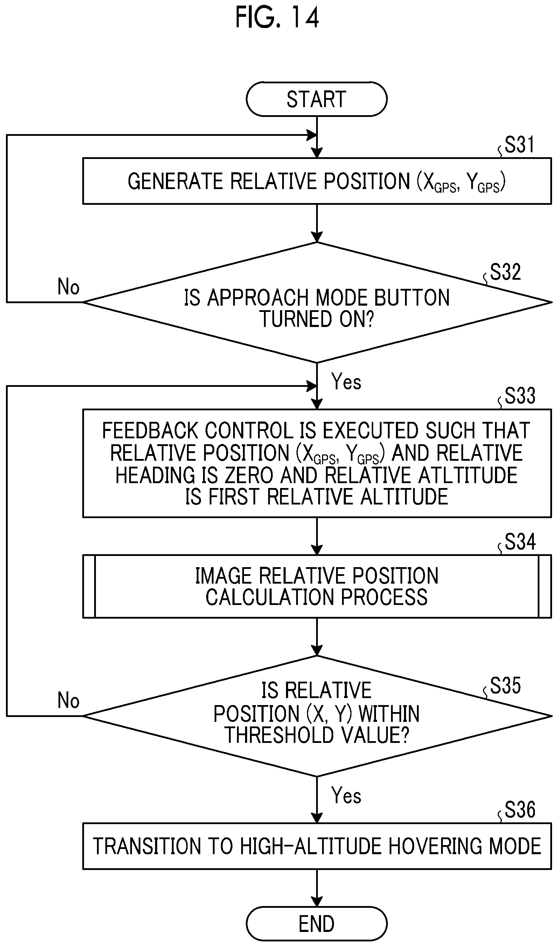

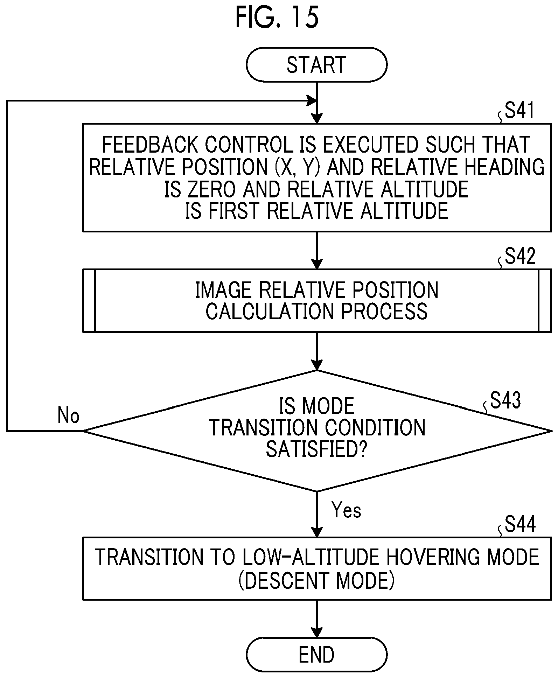

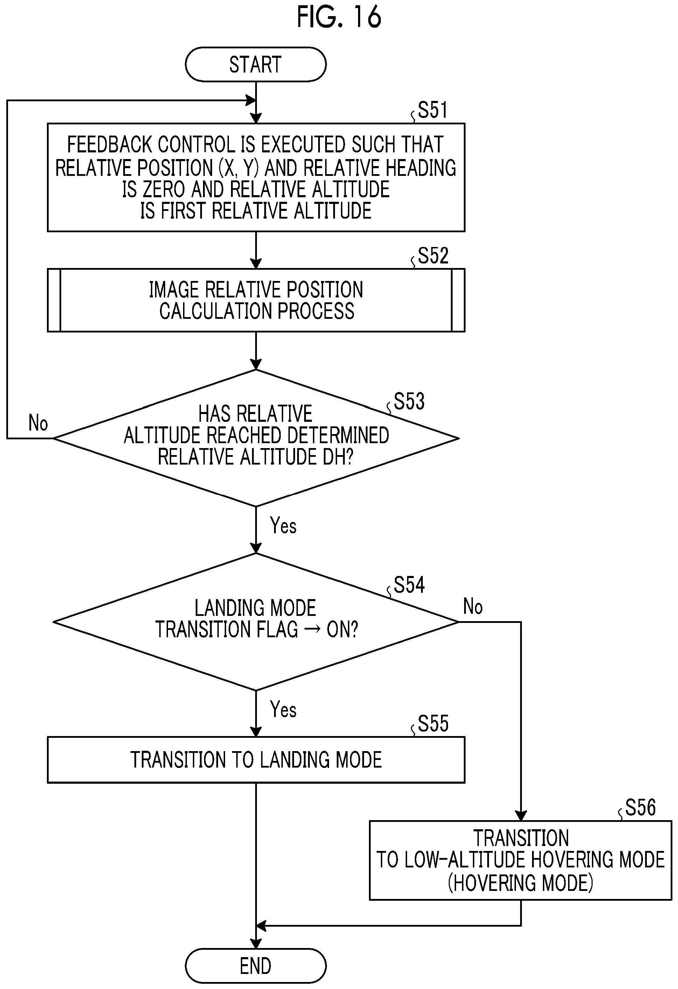

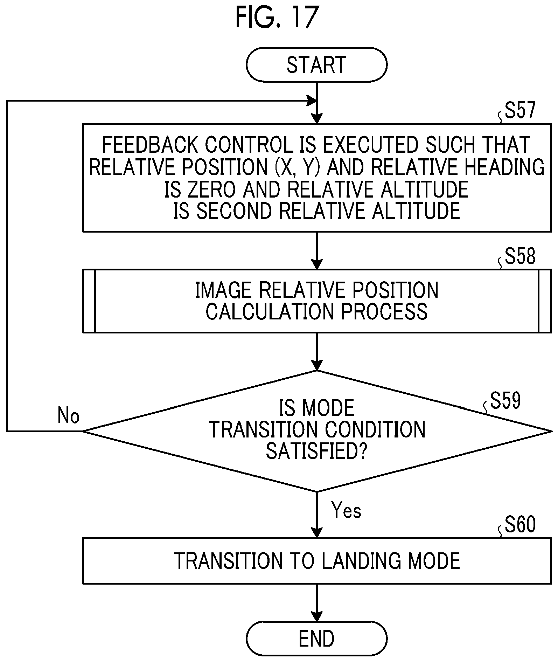

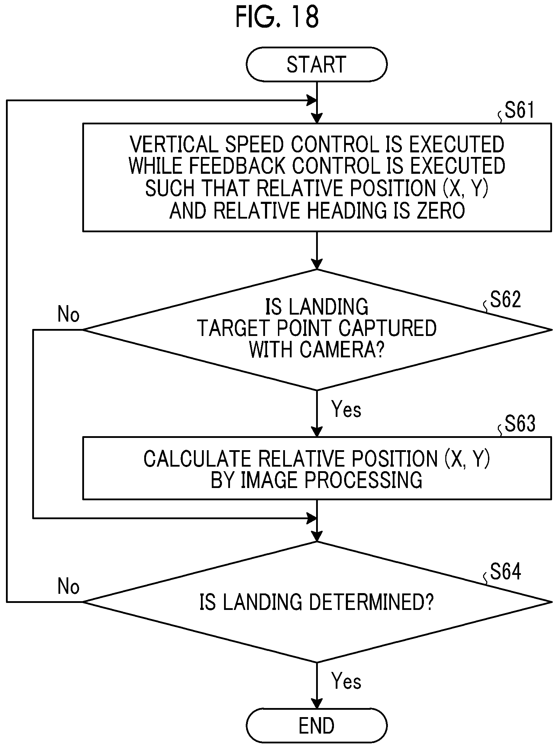

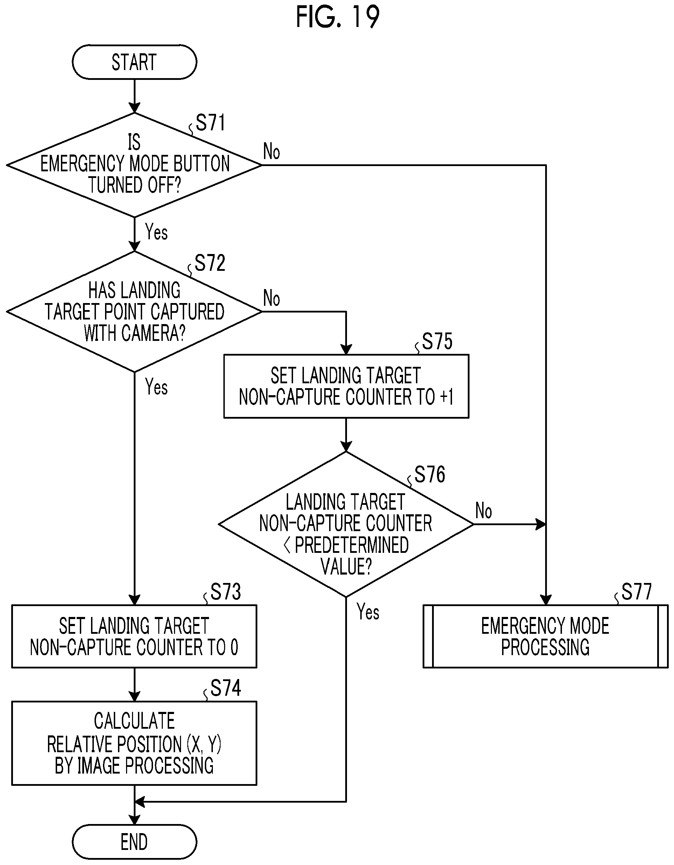

Here, each control mode will be specifically described. Fig. 14 is a flowchart showing an example of a processing procedure in an approach mode, Fig. 15 is a flowchart showing an example of a processing procedure in the high-altitude hovering mode, Fig. 16 is a flowchart showing an example of a processing procedure in the low-altitude hovering mode (descent mode), Fig. 17 is a flowchart showing an example of a processing procedure in the low-altitude hovering mode (hovering mode), Fig. 18 is a flowchart showing an example of a processing procedure in the landing mode, and Fig. 19 is a flowchart showing an example of a relative position calculation process. The processing shown in Figs. 14 to 19 is performed by the guidance calculation unit 34 and the automatic landing calculation unit 36.

### (Approach Mode)

The guidance calculation unit 34 executes the approach mode (step S11 in Fig. 4). The approach mode will be described in detail with reference to Fig. 14. As step S31, the guidance calculation unit 34 calculates (generates) the relative position (X_{GPS}, Y_{GPS}) from the position coordinates obtained by the navigation systems 20 and 60, that is, the GPS.

Next, as step S32, the guidance calculation unit 34 determines whether or not the approach mode button is turned on. The approach mode button is a button for inputting a transition instruction for the control mode provided in an operation display unit 90 of the ship 5, and is turned on and off by an operator on board the ship 5. When the preparation for the landing of the vertical takeoff and landing aircraft 1 on the ship 5 is completed, the operator turns on the approach mode button. In a case where the control unit 30 determines that the approach mode button is not turned on (No in step S32), the control unit 30 continues the process in step S31. On the other hand, in a case where it is determined that the approach mode button is turned on (Yes in step S32), the control unit 30 proceeds to the process in step S33.

As step S33, the guidance calculation unit 34 executes feedback control such that the relative position (X_{GPS}, Y_{GPS}) generated in step S31 is zero. In this manner, the guidance calculation unit 34 causes the vertical takeoff and landing aircraft 1 to fly toward the landing target point 2 in the horizontal direction. In addition, the guidance calculation unit 34 executes feedback control such that the relative heading between the calculated aircraft heading of the vertical takeoff and landing aircraft 1 and the ship heading of the ship 5 is zero, for example. In this manner, the guidance calculation unit 34 causes the vertical takeoff and landing aircraft 1 to fly such that the aircraft heading of the vertical takeoff and landing aircraft 1 coincides with the ship heading of the ship 5 in the horizontal direction. As an example, the guidance calculation unit 34 executes feedback control such that the relative heading is zero, but is not particularly limited, and the relative heading need not be zero. Further, the guidance calculation unit 34 executes feedback control such that the relative altitude Δh measured by the altitude sensor 25 is the first relative altitude Δh1. In this manner, the guidance calculation unit 34 maintains the vertical takeoff and landing aircraft 1 at the first relative altitude Δh1 (refer to Fig. 2) while descending the vertical takeoff and landing aircraft 1 from the initial altitude to the first relative altitude Δh1 in the vertical direction. The first relative altitude Δh1 is, for example, 8 m. In this way, in the approach mode, the flight control is performed on the vertical takeoff and landing aircraft 1 such that the vertical takeoff and landing aircraft 1 is within a predetermined range of the landing target point 2 by controlling the relative position (X_{GPS}, Y_{GPS}) to be zero.

As step S34, the guidance calculation unit 34 executes an image relative position calculation process and calculates the relative position (X, Y) between the vertical takeoff and landing aircraft 1 and the landing target point 2 which represents the distance in the horizontal direction. Details of the image relative position calculation process will be described later.

As step S35, the guidance calculation unit 34 determines whether or not the relative position (X, Y) between the vertical takeoff and landing aircraft 1 and the landing target point 2, which represents the distance in the horizontal direction and is calculated in step S34, is within the threshold value. The threshold value is set to a value that is a distance sufficient for the camera 10 to continue to capture the landing target point 2. In a case where it is determined that the relative position (X, Y) is not within the threshold value (No in step S35), the guidance calculation unit 34 executes the processes after step S33 again. That is, the vertical takeoff and landing aircraft 1 performs the processes after step S33 again in a case where the camera 10 does not capture the landing target point 2, in other words, the vertical takeoff and landing aircraft 1 does not sufficiently approach the landing target point 2. Then, the guidance calculation unit 34 repeatedly executes the processes after step S33 until the sufficient distance at which the vertical takeoff and landing aircraft 1 continues to capture the landing target point 2 with the camera 10 is reached. In a case where it is determined that the relative position (X, Y) is within the threshold value (Yes in step S35), the guidance calculation unit 34 determines that the vertical takeoff and landing aircraft 1 is at a sufficient distance at which the vertical takeoff and landing aircraft 1 continues to capture the landing target point 2 with the camera 10, that is, sufficiently approaches the landing target point 2, and the guidance calculation unit 34 ends the approach mode in step S36 and transitions to the high-altitude hovering mode.

### (High-altitude Hovering Mode)

Returning to the description of Fig. 4, when the approach mode is ended, the guidance calculation unit 34 executes the high-altitude hovering mode as step S12. The high-altitude hovering mode will be described in detail with reference to Fig. 15. In the high-altitude hovering mode, as step S41, the guidance calculation unit 34 executes feedback control such that the relative position (X, Y) calculated by the image relative position calculation process is zero. In addition, the guidance calculation unit 34 executes feedback control such that the relative heading between the calculated aircraft heading of the vertical takeoff and landing aircraft 1 and the ship heading of the ship 5 is zero, for example. Further, the guidance calculation unit 34 executes feedback control such that the relative altitude Δh measured by the altitude sensor 25 is the first relative altitude Δh1. In this manner, the guidance calculation unit 34 maintains the first relative altitude Δh1 while hovering the vertical takeoff and landing aircraft 1 directly above the landing target point 2 in the vertical direction. Then, the guidance calculation unit 34 executes the image relative position calculation process again as step S42.

As step S43, the guidance calculation unit 34 determines whether or not the transition condition to the low-altitude hovering mode is satisfied, based on each of the determination results of the relative position determination, the airframe attitude determination, and the camera position determination, which are the processes described with reference to Fig. 8. That is, it is determined whether or not the flags for the relative position determination, the airframe attitude determination, and the camera position determination are turned on (ON). In a case where it is determined that the transition condition to the low-altitude hovering mode is not satisfied (No in step S43), the guidance calculation unit 34 executes the processes after step S41 again. Then, the guidance calculation unit 34 repeatedly executes the processes after step S41 until the transition condition to the low-altitude hovering mode is satisfied. In a case where it is determined that the transition condition to the low-altitude hovering mode is satisfied (Yes in step S43), the guidance calculation unit 34 ends the high-altitude hovering mode and transitions to the low-altitude hovering mode as step S44.

### (Low-Altitude Hovering Mode)

Returning to the description of Fig. 4, when the high-altitude hovering mode is ended, the guidance calculation unit 34 executes the low-altitude hovering mode (descent mode) as step S13A. The low-altitude hovering mode will be described in detail with reference to Fig. 16. In the low-altitude hovering mode, as step S51, the guidance calculation unit 34 executes feedback control such that the relative position (X, Y) calculated by the image relative position calculation process is zero. In addition, the guidance calculation unit 34 executes feedback control such that the relative heading between the calculated aircraft heading of the vertical takeoff and landing aircraft 1 and the ship heading of the ship 5 is zero, for example. Further, the guidance calculation unit 34 executes feedback control such that the relative altitude Δh measured by the altitude sensor 25 is the first relative altitude Δh1. In this manner, the guidance calculation unit 34 maintains the first relative altitude Δh1 while hovering the vertical takeoff and landing aircraft 1 directly above the landing target point 2 in the vertical direction. Then, the guidance calculation unit 34 executes the image relative position calculation process again as step S52.

As step S53, the guidance calculation unit 34 determines whether or not the relative altitude of the vertical takeoff and landing aircraft 1 has decreased and reached the determined relative altitude DH. The determined relative altitude DH is a relative altitude lower than the relative altitude at which a laser altimeter can be stably used above the landing target point 2, and is a relative altitude at which the transition can be stably performed without an overshoot in the low-altitude hovering mode. Specifically, the determined relative altitude DH is a relative altitude lower than the target relative altitude (first relative altitude Δh1) in the high-altitude hovering mode and higher than the target relative altitude (second relative altitude Δh2) in the low-altitude hovering mode. In step S53, it is determined whether or not the state is in a state of determining whether or not the transition condition (landing condition) for directly transitioning to the landing mode without executing the hovering mode in the low-altitude hovering mode is satisfied. In a case where the guidance calculation unit 34 determines that the relative altitude of the vertical takeoff and landing aircraft 1 has not reached the determined relative altitude DH (No in step S53), the guidance calculation unit 34 executes the processes after step S51 again. Then, the guidance calculation unit 34 repeatedly executes the processes after step S51 until the relative altitude of the vertical takeoff and landing aircraft 1 reaches the determined relative altitude DH.

As step S53, in a case where the guidance calculation unit 34 determines that the relative altitude of the vertical takeoff and landing aircraft 1 has reached the determined relative altitude DH (Yes in step S53), as step S54, the automatic landing calculation unit 36 determines whether or not the landing mode transition flag is turned on (ON). In step S54, it is determined whether or not a transition condition (landing condition) for directly transitioning to the landing mode is satisfied without executing the hovering mode in the low-altitude hovering mode. That is, the automatic landing calculation unit 36 continues to execute the process described with reference to Fig. 7, and when the relative altitude of the vertical takeoff and landing aircraft 1 reaches the determined relative altitude DH, the process described with reference to Fig. 9 and the automatic landing mode determination are executed. When the relative altitude of the vertical takeoff and landing aircraft 1 reaches the determined relative altitude DH, the automatic landing calculation unit 36 performs the automatic landing mode determination, and in a case where the transition condition (landing condition) from the descent mode in the low-altitude hovering mode to the landing mode is satisfied, the landing mode transition flag is turned on (ON), and in a case where the transition condition (landing condition) is not satisfied, the landing mode transition flag is turned off (OFF).

In step S54, in a case where it is determined that the landing mode transition flag is turned on (ON) (Yes in step S54), as step S55, the guidance calculation unit 34 ends the hovering mode in the low-altitude hovering mode and transitions to the landing mode. On the other hand, in step S54, in a case where it is determined that the landing mode transition flag is not turned on (ON) (No in step S54), as step S56, the guidance calculation unit 34 transitions from the descent mode to the hovering mode in the low-altitude hovering mode.

In a case where the transition condition to the landing mode is not satisfied in the descent mode in the low-altitude hovering mode, as step S13, the hovering mode in the low-altitude hovering mode is executed. The hovering mode in the low-altitude hovering mode will be described in detail with reference to Fig. 17. In the hovering mode in the low-altitude hovering mode, as step S57, the guidance calculation unit 34 executes feedback control such that the relative position (X, Y) calculated by the image relative position calculation process is zero. In addition, the guidance calculation unit 34 executes feedback control such that the relative heading between the calculated aircraft heading of the vertical takeoff and landing aircraft 1 and the ship heading of the ship 5 is zero, for example. Furthermore, the guidance calculation unit 34 executes feedback control such that the relative altitude Δh measured by the altitude sensor 25 is the second relative altitude Δh2 lower than the first relative altitude Δh1. Accordingly, the guidance calculation unit 34 causes the vertical takeoff and landing aircraft 1 to hover directly above the landing target point 2 and causes the altitude of the vertical takeoff and landing aircraft 1 to be lowered to the second relative altitude Δh2 (refer to Fig. 2). The second relative altitude Δh2 is, for example, 3 m. At this time, the guidance calculation unit 34 sets the descent speed of the vertical takeoff and landing aircraft 1 as the first descent speed. The first descent speed is, for example, 0.6 m/s. Then, the guidance calculation unit 34 executes the image relative position calculation process again as step S58.

As step S59, the guidance calculation unit 34 determines whether or not the transition condition to the landing mode is satisfied, based on each determination result of the relative position determination, the relative heading determination, the airframe attitude determination, the airframe rate determination, the relative altitude determination, the landable state determination of the ship 5, and the low-altitude hovering mode determination, which are the processes described with reference to Fig. 11. That is, it is determined whether or not the flags for the relative position determination, the relative heading determination, the airframe attitude determination, the airframe rate determination, the relative altitude determination, the landable state determination of the ship 5, and the low-altitude hovering mode determination are turned on (ON). In a case where it is determined that the transition condition to the low-altitude hovering mode is not satisfied (No in step S43), the guidance calculation unit 34 executes the processes after step S41 again. Then, the guidance calculation unit 34 repeatedly performs the processes after step S57 until the transition condition to the landing mode is satisfied. In a case where it is determined that the transition condition to the landing mode is satisfied (Yes in step S59), as step S60, the guidance calculation unit 34 ends the low-altitude hovering mode and transitions to the landing mode.

### (Landing Mode)

Returning to the description of Fig. 4, when the low-altitude hovering mode is ended, as step S14, the guidance calculation unit 34 executes the landing mode. The landing mode will be described in detail with reference to Fig. 18. In the landing mode, as step S61, the guidance calculation unit 34 executes feedback control such that the relative position (X, Y) calculated by the image relative position calculation process is zero. In addition, the guidance calculation unit 34 executes feedback control such that the relative heading between the calculated aircraft heading of the vertical takeoff and landing aircraft 1 and the ship heading of the ship 5 is zero, for example. Further, the guidance calculation unit 34 executes the vertical speed control in which the descent rate is constant until the relative altitude Δh, as measured by the altitude sensor 25, reaches the third relative altitude Δh3. The descent rate is a rate of descent in altitude per unit of time. In the vertical speed control, the guidance calculation unit 34 sets the descent speed of the vertical takeoff and landing aircraft 1 as a second descent speed. Accordingly, the guidance calculation unit 34 causes the relative altitude Δh of the vertical takeoff and landing aircraft 1 to fall to a third relative altitude Δh3 (refer to Fig. 2). The third relative altitude Δh3 is, for example, 10 cm. In addition, the second descent speed is, for example, 1.0 m/s. In the present embodiment, in order to quickly land the vertical takeoff and landing aircraft 1 on the landing target point 2 in the landing mode, the second descent speed is set to be higher than the first descent speed. However, the first descent speed and the second descent speed may be set to be any larger speed or may be set to be the same value. Further, when the altitude of the vertical takeoff and landing aircraft 1 reaches the third relative altitude Δh3, the guidance calculation unit 34 further causes the vertical takeoff and landing aircraft 1 to descend while holding the operation amount related to the attitude angle of the vertical takeoff and landing aircraft 1 when the altitude of the vertical takeoff and landing aircraft 1 reaches the third relative altitude Δh3.

As step S62, the guidance calculation unit 34 determines whether or not the camera 10 has captured the landing target point 2. Whether or not the camera 10 has captured the landing target point 2 can be calculated by the same process as step S12 of the image relative position calculation process, which will be described later. In a case where it is determined that the camera 10 has captured the landing target point 2 (Yes in step S62), as step S63, the guidance calculation unit 34 calculates the relative position (X, Y) by image processing. The relative positions (X, Y) can be calculated by the same process as in step S14 of the image relative position calculation process to be described later. On the other hand, in a case where it is determined that the camera 10 has not captured the landing target point 2 (No in step S62), the guidance calculation unit 34 skips the process in step S63 and proceeds to step S64. In the present embodiment, in the landing mode, even in a state where the vertical takeoff and landing aircraft 1 sufficiently approaches the landing target point 2 and the camera 10 may not be able to temporarily capture the landing target point 2, the landing mode is continuously executed on the assumption that the vertical takeoff and landing aircraft 1 can land in the vicinity of the landing target point 2. In a case where the vertical takeoff and landing aircraft 1 is a manned aircraft, the execution of the landing mode may be interrupted based on the determination of the pilot during the execution of the landing mode.

As step S64, the flight control unit 38 determines whether or not the vertical takeoff and landing aircraft 1 has landed on the landing target point 2. Whether or not the vertical takeoff and landing aircraft 1 has landed on the landing target point 2 can be determined, for example, by providing a contact-type sensor on a leg portion (not shown) of the vertical takeoff and landing aircraft 1. In a case where it is determined that the vertical takeoff and landing aircraft 1 has not landed on the landing target point 2 (No in step S64), the flight control unit 38 performs the processes after step S61 again. In this way, the vertical takeoff and landing aircraft 1 is controlled to descend according to the procedure in step S61 until the vertical takeoff and landing aircraft 1 lands on the landing target point 2. Then, in a case where the flight control unit 38 determines that the vertical takeoff and landing aircraft 1 has landed on the landing target point 2 (Yes in step S64), the guidance calculation unit 34 ends the landing mode. Accordingly, the process routine shown in Fig. 4 is also ended.

### (Image Relative Position Calculation Process)

Next, the image relative position calculation process will be described with reference to Fig. 19. In the image relative position calculation process, as step S71, the guidance calculation unit 34 determines whether or not the emergency mode button is turned off. The emergency mode button is provided in the operation display unit 90 of the ship 5 and is turned on and off by an operator on board the ship 5. When the operator determines that the vertical takeoff and landing aircraft 1 interrupts its landing on the ship 5, the operator turns on the emergency mode button. Specifically, when the operator visually confirms that the flight state of the vertical takeoff and landing aircraft 1 is unstable due to, for example, the influence of wind or the occurrence of some kind of failure, the operator turns on the emergency mode button.

In step S71, in a case where it is determined that the emergency mode button is turned on (No in step S71), as step S77, the guidance calculation unit 34 transitions to execute the emergency mode. In the emergency mode, the guidance calculation unit 34 causes the vertical takeoff and landing aircraft 1 to temporarily ascend to a predetermined altitude (for example, 20 m) sufficiently away from the ship 5 and to maintain the current relative position (X, Y). In a case of transition to the emergency mode, the guidance calculation unit 34 can execute the emergency mode during execution of step S12 of executing the high-altitude hovering mode and step S13 of executing the low-altitude hovering mode shown in Fig. 4. When the vertical takeoff and landing aircraft 1 temporarily ascends to the altitude sufficiently away from the ship 5 by executing the emergency mode, the guidance calculation unit 34 resumes the process from step S11 shown in Fig. 4 again.

On the other hand, in a case where it is determined that the emergency mode button is turned off (Yes in step S71), as step S72, the guidance calculation unit 34 determines whether or not the camera 10 has captured the landing target point 2. Whether or not the camera 10 has captured the landing target point 2 can be determined by whether or not information for calculating the center (Cx, Cy) of the marker 7 is obtained in the image captured by the camera 10.

In a case where it is determined that the camera 10 has captured the landing target point 2 (Yes in step S72), as step S73, the guidance calculation unit 34 sets a target non-capture counter to a value of 0. Then, as step S74, the guidance calculation unit 34 calculates the relative position (X, Y) between the vertical takeoff and landing aircraft 1 and the landing target point 2 based on the center (Cx, Cy) of the marker 7, the heading of the camera 10 (that is, the aircraft heading of the vertical takeoff and landing aircraft 1 which is the same heading), and the altitude of the vertical takeoff and landing aircraft 1 (the relative altitude Δh with respect to the landing target point 2). As described above, the relative position (X, Y) is calculated by converting the center (Cx, Cy) of the marker 7 in the camera fixed coordinate system calculated by the image processing unit 32 into the relative position between the vertical takeoff and landing aircraft 1 and the landing target point 2 in the ship inertial system, and further converting the relative position (X, Y) between the vertical takeoff and landing aircraft 1 and the landing target point 2 in the aircraft inertial system.

On the other hand, in Step S72, in a case where it is determined that the camera 10 has not captured the landing target point 2 (No in step S72), as step S75, the guidance calculation unit 34 adds 1 to the value of the target non-capture counter, and as step S76, determines whether or not the target non-capture counter is within a predetermined value. In a case where it is determined that the target non-capture counter is within the predetermined value (Yes in step S76), the guidance calculation unit 34 ends the process. However, the image relative position calculation process continues to execute the process after step S71. In a case where it is determined that the target non-capture counter is not within the predetermined value (No in step S76), the guidance calculation unit 34 proceeds to step S77 and transitions to the execution of the emergency mode. That is, the guidance calculation unit 34 determines that the time during which the camera 10 cannot continuously capture the landing target point 2 is equal to or longer than the predetermined time because the target non-capture counter exceeds the predetermined value, and executes the emergency mode.

### (Effect and Action of Present Embodiment)

An automatic landing system for a vertical takeoff and landing aircraft according to a first aspect includes a camera (imaging device) 10 mounted on a vertical takeoff and landing aircraft 1; a relative position acquisition unit that acquires a relative position between the vertical takeoff and landing aircraft 1 and a landing target point 2 by performing image processing on an image obtained by capturing a marker 7 provided at the landing target point 2 with the camera 10; a relative altitude acquisition unit that acquires a relative altitude between the vertical takeoff and landing aircraft 1 and the landing target point 2; an airframe state acquisition unit that acquires a state of the vertical takeoff and landing aircraft 1; and a control unit 30 that controls the vertical takeoff and landing aircraft 1 in a plurality of control modes such that the relative position is zero, in which the control modes include a hovering mode in which the vertical takeoff and landing aircraft 1 descends to a hovering altitude and is located above the landing target point 2, and a landing mode in which the vertical takeoff and landing aircraft 1 lands on the landing target point 2 by lowering the relative altitude, and when the relative altitude is lowered to a determined relative altitude DH that is higher than the hovering altitude, in a case where a landing condition is satisfied, which includes the vertical takeoff and landing aircraft 1 being in a predetermined airframe stable state, the control unit 30 causes a transition to the landing mode, and in a case where the landing condition is not satisfied, the control unit 30 causes the vertical takeoff and landing aircraft 1 to descend to the hovering altitude.

According to the automatic landing system for a vertical takeoff and landing aircraft according to the first aspect, when the vertical takeoff and landing aircraft 1 descends and the relative altitude is lowered to the determined relative altitude DH, in a case where a landing condition is satisfied, which includes the vertical takeoff and landing aircraft 1 being in the airframe stable state, the vertical takeoff and landing aircraft 1 transitions to the landing mode. Therefore, when the vertical takeoff and landing aircraft 1 stably flies, the hovering mode in the low-altitude hovering mode can be omitted and the vertical takeoff and landing aircraft 1 can be directly transitioned to the landing mode, and the time until the vertical takeoff and landing aircraft 1 lands on the landing target point 2 can be shortened. In addition, since a button operation for transitioning to the landing mode is not required, it is possible to improve the operability.

An automatic landing system for a vertical takeoff and landing aircraft according to a second aspect is the automatic landing system for a vertical takeoff and landing aircraft according to the first aspect, in which, when the relative altitude is lowered to the determined relative altitude DH, the control unit 30 causes a transition to the landing mode in a case where a landing condition is satisfied, which includes the vertical takeoff and landing aircraft 1 being in the airframe stable state and the relative position being within a predetermined relative position threshold value. In this manner, the reliability of the landing condition can be improved by using the relative position between the vertical takeoff and landing aircraft 1 and the landing target point 2 as the landing condition.

An automatic landing system 100 for a vertical takeoff and landing aircraft according to a third aspect is the automatic landing system for a vertical takeoff and landing aircraft according to the first aspect or the second aspect, and further includes a relative heading acquisition unit that acquires a relative heading between an aircraft heading of the vertical takeoff and landing aircraft 1 and a heading of the landing target point 2, in which, when the relative altitude is lowered to the determined relative altitude DH, the control unit 30 causes a transition to the landing mode in a case where a landing condition is satisfied, which includes the vertical takeoff and landing aircraft 1 being in the airframe stable state and the relative heading being within a predetermined relative heading threshold value. In this manner, the reliability of the landing condition can be improved by using the relative heading between the vertical takeoff and landing aircraft 1 and the landing target point 2 as the landing condition.

An automatic landing system for a vertical takeoff and landing aircraft according to a fourth aspect is the automatic landing system for a vertical takeoff and landing aircraft according to any one of the first aspect to third aspect, and further includes a target point state acquisition unit that acquires a state of the landing target point 2, in which, when the relative altitude is lowered to the determined relative altitude DH, the control unit 30 causes a transition to the landing mode in a case where a landing condition is satisfied, which includes the vertical takeoff and landing aircraft 1 being in the airframe stable state and the landing target point 2 being in a predetermined target point stable state. In this manner, when the vertical takeoff and landing aircraft 1 and the ship 5 are stable, the vertical takeoff and landing aircraft 1 can be directly transitioned from the high-altitude hovering mode to the landing mode, and the time until the vertical takeoff and landing aircraft 1 lands on the landing target point 2 can be shortened.

An automatic landing system 100 for a vertical takeoff and landing aircraft according to a fifth aspect is the automatic landing system for a vertical takeoff and landing aircraft according to any one of the first aspect to fourth aspect, in which the target point state acquisition unit predicts and acquires a state of the landing target point when the vertical takeoff and landing aircraft 1 lands on the landing target point. In this manner, the reliability of the state of the landing target point 2 can be improved by using the data in which the state of the landing target point is predicted when the vertical takeoff and landing aircraft 1 has landed on the landing target point.

An automatic landing system 100 for a vertical takeoff and landing aircraft according to a sixth aspect is the automatic landing system for a vertical takeoff and landing aircraft according to any one of the first aspect to fifth aspect, in which the hovering mode includes a high-altitude hovering mode and a low-altitude hovering mode, the low-altitude hovering mode includes descent mode (a first mode) of descending to the hovering altitude and a hovering mode (second mode) of hovering at the hovering altitude, and when the descent mode is executed from the high-altitude hovering mode and the relative altitude is lowered to the determined relative altitude DH, the control unit 30 causes a transition to the landing mode in a case where the landing condition is satisfied, and the control unit 30 allows to maintain the low-altitude hovering mode, in a case where the landing condition is not satisfied. In this manner, the vertical takeoff and landing aircraft 1 can be transitioned directly from the high-altitude hovering mode to the landing mode, and the time until the vertical takeoff and landing aircraft 1 lands on the landing target point 2 can be shortened.

A vertical takeoff and landing aircraft 1 according to a seventh aspect includes an automatic landing system for a vertical takeoff and landing aircraft. Accordingly, in a case where the vertical takeoff and landing aircraft 1 stably flies, the hovering mode in the low-altitude hovering mode can be omitted and the vertical takeoff and landing aircraft 1 can directly transition to the landing mode, and the time until the vertical takeoff and landing aircraft 1 lands on the landing target point 2 can be shortened. In addition, since a button operation for transitioning to the landing mode is not required, it is possible to improve the operability.

A landing control method for a vertical takeoff and landing aircraft according to an eighth aspect includes a step of acquiring a relative position between a vertical takeoff and landing aircraft 1 and a landing target point 2 by performing image processing on an image obtained by capturing a marker 7 provided at the landing target point with a camera (imaging device) 10 mounted on a vertical takeoff and landing aircraft 1; a step of acquiring a relative altitude between the vertical takeoff and landing aircraft 1 and the landing target point 2; a step of acquiring a state of the vertical takeoff and landing aircraft 1; and a step of controlling the vertical takeoff and landing aircraft 1 in a plurality of control modes such that the relative position is zero, in which the control modes include a hovering mode in which the vertical takeoff and landing aircraft 1 descends to a hovering altitude and is located above the landing target point 2, and a landing mode in which the vertical takeoff and landing aircraft 1 lands on the landing target point 2 by lowering the relative altitude, and when the relative altitude is lowered to a determined relative altitude DH that is higher than the hovering altitude, causes a transition to the landing mode in a case where a landing condition is satisfied, which includes the vertical takeoff and landing aircraft 1 being in a predetermined airframe stable state, and in a case where the landing condition is not satisfied, causes the vertical takeoff and landing aircraft 1 to descend to the hovering altitude.

According to the landing control method for a vertical takeoff and landing aircraft according to the eighth aspect, when the vertical takeoff and landing aircraft 1 stably flies, the hovering mode in the low-altitude hovering mode can be omitted and the vertical takeoff and landing aircraft 1 can be directly transitioned to the landing mode, and the time until the vertical takeoff and landing aircraft 1 lands on the landing target point 2 can be shortened. In addition, since a button operation for transitioning to the landing mode is not required, it is possible to improve the operability.

In the above-described embodiment, the automatic landing calculation unit 36 is disposed on a side of the vertical takeoff and landing aircraft 1, and the automatic landing calculation unit 70 is disposed on a side of the landing target point 2. However, the present disclosure is not limited to this configuration. The automatic landing calculation unit may be disposed on at least one of the side of the vertical takeoff and landing aircraft 1 and the side of the landing target point 2, and may be capable of calculating the state of the vertical takeoff and landing aircraft 1 and the state of the landing target point 2.

### Reference Signs List

1: vertical takeoff and landing aircraft
2: landing target point
5: ship
7: marker
10: camera (imaging device)
20: navigation system
25: altitude sensor
30: control unit
32: image processing unit
34: guidance calculation unit
36: automatic landing calculation unit
38: flight control unit
40: data transmission device
60: navigation system
70: automatic landing calculation unit
80: data transmission device
90: operation display unit
100: automatic landing system

## Claims

1. An automatic landing system (100) for a vertical takeoff and landing aircraft (1) comprising:
an imaging device mounted on a vertical takeoff and landing aircraft (1);
a relative position acquisition unit is configured to acquire a relative position between the vertical takeoff and landing aircraft (1) and a landing target point (2) by performing image processing on an image obtained by capturing a marker (7) provided at the landing target point (2) with the imaging device;
a relative altitude acquisition unit is configured to acquire a relative altitude between the vertical takeoff and landing aircraft (1) and the landing target point (2);
an airframe state acquisition unit is configured to acquire a state of the vertical takeoff and landing aircraft (1); and
a control unit (30) is configured to control the vertical takeoff and landing aircraft (1) in a plurality of control modes such that the relative position is substantially zero,
wherein the control modes include a hovering mode in which the vertical takeoff and landing aircraft (1) is configured to descend to a hovering altitude and is located above the landing target point (2), and a landing mode in which the vertical takeoff and landing aircraft (1) is configured to land on the landing target point (2) by lowering the relative altitude, and
when the relative altitude is lower than a determined relative altitude and higher than the hovering altitude,
in a case where a landing condition is satisfied, which includes the vertical takeoff and landing aircraft (1) being in an airframe stable state where its stability exceeds a threshold, the control unit (30) is configured to cause a transition to the landing mode, and in a case where the landing condition is not satisfied, the control unit (30) is configured to cause the vertical takeoff and landing aircraft (1) to descend to the hovering altitude.

2. The automatic landing system (100) for a vertical takeoff and landing aircraft (1) according to claim 1,
wherein, when the relative altitude is lowered to the determined relative altitude, the control unit (30) is configured to cause a transition to the landing mode in a case where a landing condition is satisfied, which includes the vertical takeoff and landing aircraft (1) being in the airframe stable state and the relative position being within a predetermined relative position threshold value.

3. The automatic landing system (100) for a vertical takeoff and landing aircraft (1) according to claim 1, further comprising:
a relative heading acquisition unit is configured to acquire a relative heading between an aircraft heading of the vertical takeoff and landing aircraft (1) and a heading of the landing target point (2),
wherein, when the relative altitude is lowered to the determined relative altitude, the control unit (30) is configured to cause a transition to the landing mode in a case where a landing condition is satisfied, which includes the vertical takeoff and landing aircraft (1) being in the airframe stable state and the relative heading being within a predetermined relative heading threshold value.

4. The automatic landing system (100) for a vertical takeoff and landing aircraft (1) according to claim 1, further comprising:
a target point state acquisition unit is configured to acquire a state of the landing target point (2),
wherein, when the relative altitude is lowered to the determined relative altitude, the control unit (30) is configured to cause a transition to the landing mode in a case where a landing condition is satisfied, which includes the vertical takeoff and landing aircraft (1) being in the airframe stable state and the landing target point (2) being in a predetermined target point stable state.

5. The automatic landing system (100) for a vertical takeoff and landing aircraft (1) according to claim 4,
wherein the target point state acquisition unit is configured to predict and acquires a state of the landing target point (2) when the vertical takeoff and landing aircraft (1) lands on the landing target point (2).

6. The automatic landing system (100) for a vertical takeoff and landing aircraft (1) according to any one of claims 1 to 5,
wherein the hovering mode includes a high-altitude hovering mode and a low-altitude hovering mode, the low-altitude hovering mode includes a first mode of descending to the hovering altitude and a second mode of hovering at the hovering altitude, and
when the first mode is executed from the high-altitude hovering mode and the relative altitude is lower than the determined relative altitude and higher than the hovering altitude, the control unit (30) is configured to cause a transition to the landing mode in a case where the landing condition is satisfied, the control unit (30) is configured to allow to maintain the low-altitude hovering mode, in a case where the landing condition is not satisfied and the control unit (30) is configured to cause a transition to the landing mode in a case where the landing condition is satisfied in the low-altitude hovering mode.

7. A vertical takeoff and landing aircraft (1) comprising:
the automatic landing system (100) for a vertical takeoff and landing aircraft (1) according to claim 1.

8. A landing control method for a vertical takeoff and landing aircraft (1), the method comprising:
a step of acquiring a relative position between a vertical takeoff and landing aircraft (1) and a landing target point (2) by performing image processing on an image obtained by capturing a marker (7) provided at the landing target point (2) with an imaging device mounted on a vertical takeoff and landing aircraft (1);
a step of acquiring a relative altitude between the vertical takeoff and landing aircraft (1) and the landing target point (2);
a step of acquiring a state of the vertical takeoff and landing aircraft (1); and
a step of controlling the vertical takeoff and landing aircraft (1) in a plurality of control modes such that the relative position is zero,
wherein the control modes
include a hovering mode in which the vertical takeoff and landing aircraft (1) descends to a hovering altitude and is located above the landing target point (2), and a landing mode in which the vertical takeoff and landing aircraft (1) lands on the landing target point (2) by lowering the relative altitude, and
when the relative altitude is lower than a determined relative altitude and higher than the hovering altitude, cause a transition to the landing mode in a case where a landing condition is satisfied, which includes the vertical takeoff and landing aircraft (1) being in an airframe stable state where its stability exceeds a threshold, and in a case where the landing condition is not satisfied, cause the vertical takeoff and landing aircraft (1) to descend to the hovering altitude.

## Patentansprüche

1. Automatisches Landesystem (100) für ein Senkrechtstart- und -landeflugzeug (1), umfassend:
eine Bildgebungsvorrichtung, die an einem Senkrechtstart- und -landeflugzeug (1) montiert ist;
eine Relativpositionserfassungseinheit, die ausgebildet ist, eine Relativposition zwischen dem Senkrechtstart- und -landeflugzeug (1) und einem Landezielpunkt (2) durch Ausführen einer Bildverarbeitung an einem Bild zu erfassen, das durch Aufnehmen eines am Landezielpunkt (2) vorgesehenen Markers (7) mit der Bildgebungsvorrichtung erhalten wird;
eine Relativhöhenerfassungseinheit, die ausgebildet ist, eine Relativhöhe zwischen dem Senkrechtstart- und -landeflugzeug (1) und dem Landezielpunkt (2) zu erfassen;
eine Erfassungseinheit zum Erfassen des Flugzellenzustands, die ausgebildet ist, einen Zustand des Senkrechtstart- und -landeflugzeugs (1) zu erfassen; und
eine Steuereinheit (30), die ausgebildet ist, das Senkrechtstart- und -landeflugzeug (1) in einer Vielzahl von Steuermodi derart zu steuern, dass die Relativposition im Wesentlichen null ist,
wobei die Steuermodi einen Schwebemodus einschließen, in dem das Senkrechtstart- und -landeflugzeug (1) ausgebildet ist, auf eine Schwebehöhe abzusinken und über dem Landezielpunkt (2) angeordnet ist, und einen Landemodus, in dem das Senkrechtstart- und -landeflugzeug (1) ausgebildet ist, auf dem Landezielpunkt (2) durch Verringern der Relativhöhe zu landen, und
wenn die Relativhöhe niedriger als eine bestimmte Relativhöhe und höher als die Schwebehöhe ist,
in einem Fall, in dem eine Landebedingung erfüllt ist, die einschließt, dass sich das Senkrechtstart- und -landeflugzeug (1) in einem stabilen Flugzellenzustand befindet, in dem seine Stabilität eine Schwelle überschreitet, die Steuereinheit (30) ausgebildet ist, einen Übergang in den Landemodus zu bewirken, und in einem Fall, in dem die Landebedingung nicht erfüllt ist, die Steuereinheit (30) ausgebildet ist, das Senkrechtstart- und - landeflugzeug (1) zu veranlassen, auf die Schwebehöhe abzusinken.

2. Automatisches Landesystem (100) für ein Senkrechtstart- und -landeflugzeug (1) nach Anspruch 1,
wobei, wenn die Relativhöhe auf die bestimmte Relativhöhe abgesenkt wird, die Steuereinheit (30) ausgebildet ist, einen Übergang in den Landemodus in einem Fall zu bewirken, in dem eine Landebedingung erfüllt ist, die einschließt, dass sich das Senkrechtstart- und -landeflugzeug (1) in dem stabilen Flugzellenzustand befindet und die Relativposition innerhalb eines vorbestimmten Relativpositionsschwellenwerts liegt.

3. Automatisches Landesystem (100) für ein Senkrechtstart- und -landeflugzeug (1) nach Anspruch 1, weiter umfassend:
eine Erfassungseinheit zum Erfassen der relativen Ausrichtung, die ausgebildet ist, eine relative Ausrichtung zwischen einer Ausrichtung des Senkrechtstart- und - landeflugzeugs (1) und einer Ausrichtung des Landezielpunkts (2) zu erfassen,
wobei, wenn die Relativhöhe auf die bestimmte Relativhöhe abgesenkt wird, die Steuereinheit (30) ausgebildet ist, einen Übergang in den Landemodus in einem Fall zu bewirken, in dem eine Landebedingung erfüllt ist, die einschließt, dass sich das Senkrechtstart- und -landeflugzeug (1) in dem stabilen Flugzellenzustand befindet und die relative Ausrichtung innerhalb eines vorbestimmten Schwellenwerts der relativen Ausrichtung liegt.

4. Automatisches Landesystem (100) für ein Senkrechtstart- und -landeflugzeug (1) nach Anspruch 1, weiter umfassend:
eine Erfassungseinheit zum Erfassen des Zustands des Zielpunkts, die ausgebildet ist, einen Zustand des Landezielpunkts (2) zu erfassen,
wobei, wenn die Relativhöhe auf die bestimmte Relativhöhe abgesenkt wird, die Steuereinheit (30) ausgebildet ist, einen Übergang in den Landemodus in einem Fall zu bewirken, in dem eine Landebedingung erfüllt ist, die einschließt, dass sich das Senkrechtstart- und -landeflugzeug (1) in dem stabilen Flugzellenzustand befindet und sich der Landezielpunkt (2) in einem vorbestimmten stabilen Zustand des Zielpunkts befindet.

5. Automatisches Landesystem (100) für ein Senkrechtstart- und -landeflugzeug (1) nach Anspruch 4,
wobei die Einheit zum Erfassen des Zustands des Zielpunkts ausgebildet ist, einen Zustand des Landezielpunkts (2), wenn das Senkrechtstart- und -landeflugzeug (1) auf dem Landezielpunkt (2) landet, vorherzusagen und zu erfassen.

6. Automatisches Landesystem (100) für ein Senkrechtstart- und -landeflugzeug (1) nach einem der Ansprüche 1 bis 5,
wobei der Schwebemodus einen Schwebemodus in großer Höhe und einen Schwebemodus in geringer Höhe einschließt, der Schwebemodus in geringer Höhe einen ersten Modus des Absinkens auf die Schwebehöhe und einen zweiten Modus des Schwebens auf der Schwebehöhe einschließt, und
wenn der erste Modus aus dem Schwebemodus in großer Höhe ausgeführt wird und die Relativhöhe niedriger als die bestimmte Relativhöhe und höher als die Schwebehöhe ist, die Steuereinheit (30) ausgebildet ist, einen Übergang in den Landemodus in einem Fall zu bewirken, in dem die Landebedingung erfüllt ist,
die Steuereinheit (30) dazu ausgebildet ist, in einem Fall, in dem die Landebedingung nicht erfüllt ist, das Beibehalten des Schwebemodus in geringer Höhe zuzulassen, und die Steuereinheit (30) dazu ausgebildet ist, in einem Fall, in dem die Landebedingung in dem Schwebemodus in geringer Höhe erfüllt ist, einen Übergang in den Landemodus zu bewirken.

7. Senkrechtstart- und -landeflugzeug (1), umfassend:
das automatische Landesystem (100) für ein Senkrechtstart- und -landeflugzeug (1) nach Anspruch 1.

8. Landesteuerungsverfahren für ein Senkrechtstart- und -landeflugzeug (1), wobei das Verfahren umfasst:
einen Schritt des Erfassens einer Relativposition zwischen einem Senkrechtstart- und -landeflugzeug (1) und einem Landezielpunkt (2) durch Durchführen einer Bildverarbeitung an einem Bild, das durch Aufnehmen eines am Landezielpunkt (2) vorgesehenen Markers (7) mit einer an einem Senkrechtstart- und -landeflugzeug (1) montierten Bildgebungsvorrichtung erhalten wird;
einen Schritt des Erfassens einer Relativhöhe zwischen dem Senkrechtstart- und - landeflugzeug (1) und dem Landezielpunkt (2);
einen Schritt des Erfassens eines Zustands des Senkrechtstart- und - landeflugzeugs (1); und
einen Schritt des Steuerns des Senkrechtstart- und -landeflugzeugs (1) in einer Vielzahl von Steuermodi derart, dass die Relativposition null ist,
wobei die Steuermodi
einen Schwebemodus einschließen, in dem das Senkrechtstart- und - landeflugzeug (1) auf eine Schwebehöhe absinkt und über dem Landezielpunkt (2) angeordnet ist, und einen Landemodus, in dem das Senkrechtstart- und -landeflugzeug (1) auf dem Landezielpunkt (2) durch Verringern der Relativhöhe landet, und
wenn die Relativhöhe niedriger als eine bestimmte Relativhöhe und höher als die Schwebehöhe ist, einen Übergang in den Landemodus in einem Fall zu bewirken, in dem eine Landebedingung erfüllt ist, die einschließt, dass sich das Senkrechtstart- und - landeflugzeug (1) in einem stabilen Flugzellenzustand befindet, in dem seine Stabilität eine Schwelle überschreitet, und in einem Fall, in dem die Landebedingung nicht erfüllt ist, das Senkrechtstart- und -landeflugzeug (1) zu veranlassen, auf die Schwebehöhe abzusinken.

## Revendications

1. Système d'atterrissage automatique (100) pour un aéronef à décollage et atterrissage verticaux (1) comprenant :
un dispositif d'imagerie monté sur un aéronef à décollage et atterrissage verticaux (1) ;
une unité d'acquisition de position relative qui est configurée pour acquérir une position relative entre l'aéronef à décollage et atterrissage verticaux (1) et un point cible d'atterrissage (2) en effectuant un traitement d'image sur une image obtenue par capture d'un marqueur (7) prévu au point cible d'atterrissage (2) avec le dispositif d'imagerie ;
une unité d'acquisition d'altitude relative qui est configurée pour acquérir une altitude relative entre l'aéronef à décollage et atterrissage verticaux (1) et le point cible d'atterrissage (2) ;
une unité d'acquisition d'état de cellule qui est configurée pour acquérir un état de l'aéronef à décollage et atterrissage verticaux (1) ; et
une unité de commande (30) qui est configurée pour commander l'aéronef à décollage et atterrissage verticaux (1) dans une pluralité de modes de commande de sorte que la position relative soit sensiblement nulle,
dans lequel les modes de commande incluent un mode de vol stationnaire dans lequel l'aéronef à décollage et atterrissage verticaux (1) est configuré pour descendre jusqu'à une altitude de vol stationnaire et est situé au-dessus du point cible d'atterrissage (2), et un mode d'atterrissage dans lequel l'aéronef à décollage et atterrissage verticaux (1) est configuré pour atterrir sur le point cible d'atterrissage (2) en abaissant l'altitude relative, et
lorsque l'altitude relative est inférieure à une altitude relative déterminée et supérieure à l'altitude de vol stationnaire,
dans le cas où une condition d'atterrissage est satisfaite, laquelle inclut le fait que l'aéronef à décollage et atterrissage verticaux (1) est dans un état stable de cellule dans lequel sa stabilité dépasse un seuil, l'unité de commande (30) est configurée pour provoquer une transition vers le mode d'atterrissage, et dans le cas où la condition d'atterrissage n'est pas satisfaite, l'unité de commande (30) est configurée pour amener l'aéronef à décollage et atterrissage verticaux (1) à descendre jusqu'à l'altitude de vol stationnaire.

2. Système d'atterrissage automatique (100) pour un aéronef à décollage et atterrissage verticaux (1) selon la revendication 1,
dans lequel, lorsque l'altitude relative est abaissée jusqu'à l'altitude relative déterminée, l'unité de commande (30) est configurée pour provoquer une transition vers le mode d'atterrissage dans le cas où une condition d'atterrissage est satisfaite, laquelle inclut le fait que l'aéronef à décollage et atterrissage verticaux (1) est dans l'état stable de cellule et que la position relative se trouve dans les limites d'une valeur seuil de position relative prédéterminée.

3. Système d'atterrissage automatique (100) pour un aéronef à décollage et atterrissage verticaux (1) selon la revendication 1, comprenant en outre :
une unité d'acquisition de cap relatif qui est configurée pour acquérir un cap relatif entre un cap d'aéronef de l'aéronef à décollage et atterrissage verticaux (1) et un cap du point cible d'atterrissage (2),
dans lequel, lorsque l'altitude relative est abaissée jusqu'à l'altitude relative déterminée, l'unité de commande (30) est configurée pour provoquer une transition vers le mode d'atterrissage dans le cas où une condition d'atterrissage est satisfaite, laquelle inclut le fait que l'aéronef à décollage et atterrissage verticaux (1) est dans l'état stable de cellule et que le cap relatif se trouve dans les limites d'une valeur seuil de cap relatif prédéterminée.

4. Système d'atterrissage automatique (100) pour un aéronef à décollage et atterrissage verticaux (1) selon la revendication 1, comprenant en outre :
une unité d'acquisition d'état de point cible qui est configurée pour acquérir un état du point cible d'atterrissage (2),
dans lequel, lorsque l'altitude relative est abaissée jusqu'à l'altitude relative déterminée, l'unité de commande (30) est configurée pour provoquer une transition vers le mode d'atterrissage dans le cas où une condition d'atterrissage est satisfaite, laquelle inclut le fait que l'aéronef à décollage et atterrissage verticaux (1) est dans l'état stable de cellule et que le point cible d'atterrissage (2) est dans un état stable de point cible prédéterminé.

5. Système d'atterrissage automatique (100) pour un aéronef à décollage et atterrissage verticaux (1) selon la revendication 4,
dans lequel l'unité d'acquisition d'état de point cible est configurée pour prédire et acquérir un état du point cible d'atterrissage (2) lorsque l'aéronef à décollage et atterrissage verticaux (1) atterrit sur le point cible d'atterrissage (2).

6. Système d'atterrissage automatique (100) pour un aéronef à décollage et atterrissage verticaux (1) selon l'une quelconque des revendications 1 à 5,
dans lequel le mode de vol stationnaire inclut un mode de vol stationnaire à haute altitude et un mode de vol stationnaire à basse altitude, le mode de vol stationnaire à basse altitude inclut un premier mode de descente jusqu'à l'altitude de vol stationnaire et un deuxième mode de vol stationnaire à l'altitude de vol stationnaire, et
lorsque le premier mode est exécuté à partir du mode de vol stationnaire à haute altitude et que l'altitude relative est inférieure à l'altitude relative déterminée et supérieure à l'altitude de vol stationnaire, l'unité de commande (30) est configurée pour provoquer une transition vers le mode d'atterrissage dans le cas où la condition d'atterrissage est satisfaite, l'unité de commande (30) est configurée pour autoriser le maintien du mode de vol stationnaire à basse altitude, dans le cas où la condition d'atterrissage n'est pas satisfaite et l'unité de commande (30) est configurée pour provoquer une transition vers le mode d'atterrissage dans le cas où la condition d'atterrissage est satisfaite dans le mode de vol stationnaire à basse altitude.

7. Aéronef à décollage et atterrissage verticaux (1) comprenant :
le système d'atterrissage automatique (100) pour un aéronef à décollage et atterrissage verticaux (1) selon la revendication 1.

8. Procédé de commande d'atterrissage pour un aéronef à décollage et atterrissage verticaux (1), le procédé comprenant :
une étape d'acquisition d'une position relative entre un aéronef à décollage et atterrissage verticaux (1) et un point cible d'atterrissage (2) en effectuant un traitement d'image sur une image obtenue par capture d'un marqueur (7) prévu au point cible d'atterrissage (2) avec un dispositif d'imagerie monté sur un aéronef à décollage et atterrissage verticaux (1) ;
une étape d'acquisition d'une altitude relative entre l'aéronef à décollage et atterrissage verticaux (1) et le point cible d'atterrissage (2) ;
une étape d'acquisition d'un état de l'aéronef à décollage et atterrissage verticaux (1) ; et
une étape de commande de l'aéronef à décollage et atterrissage verticaux (1) dans une pluralité de modes de commande de sorte que la position relative soit nulle,
dans lequel les modes de commande
incluent un mode de vol stationnaire dans lequel l'aéronef à décollage et atterrissage verticaux (1) descend jusqu'à une altitude de vol stationnaire et est situé au-dessus du point cible d'atterrissage (2), et un mode d'atterrissage dans lequel l'aéronef à décollage et atterrissage verticaux (1) atterrit sur le point cible d'atterrissage (2) en abaissant l'altitude relative, et
lorsque l'altitude relative est inférieure à une altitude relative déterminée et supérieure à l'altitude de vol stationnaire, provoquent une transition vers le mode d'atterrissage dans le cas où une condition d'atterrissage est satisfaite, laquelle inclut le fait que l'aéronef à décollage et atterrissage verticaux (1) est dans un état stable de cellule dans lequel sa stabilité dépasse un seuil, et dans le cas où la condition d'atterrissage n'est pas satisfaite, provoquent la descente de l'aéronef à décollage et atterrissage verticaux (1) jusqu'à l'altitude de vol stationnaire.
